# EUROPÄISCHE PATENTSCHRIFT

(11) **EP 3 535 464 B1**
(45) Veröffentlichungstag und Bekanntmachung des Hinweises auf die Patenterteilung: **16.06.2021**
(21) Anmeldenummer: 17793952.7
(22) Anmeldetag: 03.11.2017
(51) Int. Cl.: E05B 29/00, E05B 17/04, E05B 17/00

(54) **SCHLIESSVORRICHTUNG**
LOCKING DEVICE
DISPOSITIF DE FERMETURE

(30) Priorität: 04.11.2016 DE 102016121045
(43) Veröffentlichungstag der Anmeldung: 11.09.2019
(73) Patentinhaber: HUF Hülsbeck & Fürst GmbH & Co. KG, 42551 Velbert (DE)
(72) Erfinder: HABECKE, Matthias, 45529 Hattingen (DE); JACOB, Dirk, 42579 Heiligenhaus (DE); GEURDEN, Armin, 47929 Grefrath (DE); KUHNKE, Frank, 45279 Essen (DE)
(74) Vertreter: Patentanwälte Bals & Vogel
(86) Internationale Anmeldenummer: PCT/EP2017/078249
(87) Internationale Veröffentlichungsnummer: WO 2018/083276

(56) Entgegenhaltungen:
- EP-A1- 0 395 632
- WO-A1-2004/085772
- WO-A1-2015/114172
- WO-A1-2015/189367
- DE-A1-102013 216 205
- DE-A1-102014 118 598
- FR-A5- 2 079 573

## Beschreibung

Die Erfindung betrifft eine Schließvorrichtung zum Betätigen eines Schließmechanismus eines Fahrzeuges, mit einem Zylindergehäuse, in welchem ein Zylinderkern drehbar aufgenommen ist, wobei zwischen dem Zylindergehäuse und dem Zylinderkern mehrere axial nacheinander angeordnete, radial bewegbare Zuhaltungen angeordnet sind, die durch einen passenden Schlüssel sortierbar sind, um den Zylinderkern drehbar vom Zylindergehäuse zu entkoppeln.

Schließvorrichtungen für Fahrzeuge der oben genannten Art sind aus dem Stand der Technik grundsätzlich bekannt. Solche Schließvorrichtungen umfassen meistens einen drehbaren Zylinderkern, welcher durch Zuhaltungen drehfest an ein stationär gelagertes Zylindergehäuse koppelbar ist. Die Zuhaltungen werden derart kodiert, dass sie durch einen passenden Schlüssel sich im Zylinderkern sortieren lassen, wodurch der Zylinderkern drehbar vom Zylindergehäuse entkoppelt wird. Bei solchen Schließvorrichtungen hat sich als Nachteil herausgestellt, dass die Zuhaltungen durch ein Einbruchswerkzeug, bspw. einen Schraubenzieher, sortiert werden können, wodurch eine unberechtigte Person den Schließmechanismus des Fahrzeuges betätigen und sich Zugang zum Fahrzeuginnenraum verschaffen kann. Solche Schließvorrichtungen sind z.B. aus EP0395632 oder FR2079573 bekannt.

Es ist daher die Aufgabe der vorliegenden Erfindung, eine Schließvorrichtung der vorstehend genannten Art zumindest teilweise zu verbessern. Insbesondere ist es Aufgabe der Erfindung, eine Schließvorrichtung bereitzustellen, die eine sichere Betätigung des Schließmechanismus des Fahrzeuges ermöglicht und die eine verbesserte Einbruchssicherheit, insbesondere beim Picking, aufweist, trotz aller möglichen Arten der Manipulation an der Schließvorrichtung und trotz unterschiedlicher Einbruchswerkzeuge.

Diese Aufgabe wird ausgehend von einer Schließvorrichtung gemäß dem Anspruch 1 gelöst. Weitere vorteilhafte Weiterbildungen der Erfindung sind in den abhängigen Ansprüchen angegeben. Merkmale, die zu den einzelnen Ausführungsformen der erfindungsgemäßen Schließvorrichtung offenbart werden, können in der Weise miteinander kombiniert werden, dass bezüglich der Offenbarung zu den Ausführungsformen der erfindungsgemäßen Sperrvorrichtung stets wechselseitig Bezug genommen wird bzw. werden kann.

Die Erfindung stellt eine Schließvorrichtung zum Betätigen eines Schließmechanismus eines Fahrzeuges bereit, die mit einem Zylindergehäuse ausgeführt ist, in welchem ein Zylinderkern drehbar aufgenommen ist, wobei zwischen dem Zylindergehäuse und dem Zylinderkern mehrere axial nacheinander angeordnete, radial bewegbare Zuhaltungen angeordnet sind, die in einer Freigabeposition durch einen passenden Schlüssel im Zylinderkern sortierbar sind, um den Zylinderkern vom Zylindergehäuse drehbar zu entkoppeln, und die in einer Arretierposition nach dem Abzug des passenden Schlüssels aus dem Zylinderkern mit dem Zylindergehäuse verrastbar sind, um den Zylinderkern an das Zylindergehäuse drehfest zu koppeln, und wobei zwischen dem Zylindergehäuse und dem Zylinderkern mindestens ein radial bewegbares Verriegelungselement angeordnet ist, welches durch eine Drehung des Zylinderkerns in eine Sicherheitsnut an mindestens einer Zuhaltung einfahrbar ist. Die Sicherheitsnut der mindestens einen Zuhaltung ist derart ausgebildet, dass bei dem in der Sicherheitsnut eingefahrenen Verriegelungselement ein erstes Spiel zwischen dem Verriegelungselement und der Sicherheitsnut entsteht. Hierdurch kann die Zuhaltung bei einem Aufbruchsversuch durch Picking weiterhin in eine Arretiernut am Zylindergehäuse ragen und dieses sichern, und zwar insbesondere auch dann, wenn das Verriegelungselement bereits gepickt ist bzw. wäre (in die Sicherheitsnut eingefahren).

Die Schließvorrichtung im Sinne der Erfindung dient zum Betätigen eines Schließmechanismus an einer Fahrzeugtür, bspw. einer Fahrertür, oder einer Fahrzeugklappe, bspw. einer Kofferraumklappe. Dabei ist es denkbar, dass der Schließmechanismus eine Zentralverriegelung des Fahrzeuges oder ein Schloss der jeweiligen Fahrzeugtür oder Fahrzeugklappe ist. Grundsätzlich ist es ebenfalls denkbar, dass die erfindungsgemäße Schließvorrichtung zum Freigeben eines Lenkradschlosses oder eines Gangschalthebels des Fahrzeuges eingesetzt werden kann.

Insofern ist die Erfindung auch explizit auf ein KFZ-Türschloss mit der erfindungsgemäßen Schließvorrichtung sowie auf ein Lenkradschloss mit der erfindungsgemäßen Schließvorrichtung gerichtet.

Die Schließvorrichtung im Sinne der Erfindung kann über eine Vielzahl an Zuhaltungen, mindestens jedoch vier Zuhaltungen, verfügen. Die Zuhaltungen sind dabei in entsprechenden Führungsnuten zwischen dem drehbaren Zylinderkern und dem Zylindergehäuse aufgenommen. Die Führungsnuten reichen bis in einen Schlüsselkanal im Zylinderkern und erstrecken sich vom Schlüsselkanal im Zylinderkern bis in das Zylindergehäuse. In der Arretierposition rasten die Zuhaltungen im Zylindergehäuse ein und verhindern die Drehung des Zylinderkerns im Zylindergehäuse. In der Freigebeposition sind die Zuhaltungen vollständig im Zylinderkern aufgenommen, sodass die Drehung des Zylinderkerns im Zylindergehäuse möglich ist. Alle Zuhaltungen können eine entsprechende Sicherheitsnut zur Aufnahme des radial bewegbaren Verriegelungselementes, bspw. an einer Außenseite, aufweisen.

Das radial bewegbare Verriegelungselement (oder einfach Verriegelungselement) erstreckt sich ebenfalls in entsprechenden Führungsnuten vom Zylinderkern bis in das Zylindergehäuse, reicht aber nicht bis zum Schlüsselkanal im Zylinderkern, sondern nur bis zur Außenseite der Zuhaltungen, an der die Sicherheitsnut ausgebildet sein kann. Das Verriegelungselement kann vorzugsweise federelastisch, bspw. durch zwei endseitlich angeordnete Federelemente, in eine radiale Richtung aus dem Zylinderkern zum Zylindergehäuse vorgespannt sein. Eine Drehung des Zylinderkerns kann die federelastische Vorspannung am Verriegelungselement überwinden und das Verriegelungselement vollständig in den Zylinderkern eintauchen lassen. Hierzu ist es jedoch erforderlich, dass das Verriegelungselement in die jeweilige Sicherheitsnut bzw. Sicherheitsnuten an der bzw. an den Zuhaltungen einfahren kann. Dies ist wiederum nur dann möglich, wenn alle Zuhaltungen durch einen passenden Schlüssel sortiert sind, sodass die Sicherheitsnut bzw. die Sicherheitsnuten in eine radiale Richtung des Zylinderkerns gesehen gegenüber dem Verriegelungselement liegt bzw. liegen und die Zuhaltungen somit dem Eintauchen des Verriegelungselementes in den Zylinderkern nicht im Wege stehen.

Der Erfindungsgedanke liegt dabei darin, das Picking bei einer Schließvorrichtung durch ein Aufbruchswerkzeug durch die gezielte Ausgestaltung von und durch ein entsprechendes Zusammenspiel zwischen den Zuhaltungen und dem Verriegelungselement zu erschweren. Hierbei kommt das radial bewegbare Verriegelungselement beim Schließzylinder zum Einsatz, welches in einer ersten Funktion als ein Sicherheitselement das Picking per se erschwert. Dies geschieht aus dem Grund, dass das Verriegelungselement nur dann vollständig in den Zylinderkern einfahren kann (dabei spricht man von einer Freigabe des Zylinderkerns zum Drehen durch das Verriegelungselement), wenn alle Zuhaltungen sortiert oder im Falle eines Einbruchs gepickt sind. In einer zweiten Funktion sorgt das Verriegelungselement dafür, dass zuerst das Verriegelungselement gepickt werden muss, damit überhaupt eine Zuhaltung gepickt werden kann (dabei spricht man von einer Freigabe des Zylinderkerns zum Drehen durch die Zuhaltung). Dies wird dadurch erreicht, dass ein bestimmtes, gezielt eingestelltes erstes Spiel zwischen der jeweiligen Sicherheitsnut an der oder an den Zuhaltungen und dem Verriegelungselement vorgesehen ist.

Ein Picking geschieht durch ein leichtes hin und her Drehen des Zylinders um die Drehachse des Zylinderkerns sowie ein hoch und runter Bewegen der Zuhaltungen bzgl. der Drehachse des Zylinderkerns durch ein Pickingwerkzeug, welches in den Schlüsselkanal eingeführt wird. Aufgrund dieses ersten Spiels kann das Verriegelungselement durch hin und her Drehen des Zylinders, bspw. entgegen der Federkraft, zum Eintauchen in den Zylinderkern reingezwungen sein, sollte eine Sicherheitsnut in der Zuhaltung in die radiale Richtung des Zylinderkerns gesehen gegenüber dem Verriegelungselement liegen. Auf die entsprechende Höhe wird die Zuhaltung durch hoch und runter Bewegen der Zuhaltung bewegt. Aber sogar dann, wenn das Verriegelungselement in die Sicherheitsnut eingefahren wäre, bewirkt das erfindungsgemäße erste Spiel, dass das Zylindergehäuse durch die Zuhaltung immer noch nicht freigegeben ist. Hierzu müsste die Zuhaltung in einem weiteren Schritt nach unten oder nach oben bzgl. der Drehachse des Zylinderkerns bewegt werden, bis sie den Zylinderkern freigeben kann.

Das erste Spiel kann dadurch gebildet werden, dass die Breite D der Sicherheitsnut von zumindest einer Zuhaltung größer gewählt werden kann als die Breite d des Verriegelungselementes im (Quer-)Schnitt durch den Zylinderkern betrachtet. Das erste Spiel kann dabei durch einen Freiraum mit einem seitlichen Abstand (gebildet durch die Differenz der Breite der Sicherheitsnut minus die Breite des Verriegelungselementes im (Quer-)Schnitt) zwischen der Sicherheitsnut und dem eingefahrenen Verriegelungselement gebildet werden, wobei insbesondere zur Bestimmung des seitlichen Abstands vom ersten Spiel das eingefahrene Verriegelungselement mit einer Seite an einer Seite der Sicherheitsnut anliegt. Das erste Spiel kann vorzugsweise kleiner 2 mm, bevorzugt kleiner 1 mm, besonders bevorzugt kleiner 500 µm und idealerweise kleiner 300 µm eingestellt sein.

Das radial bewegbare Verriegelungselement im Sinne der Erfindung stellt somit im Rahmen seiner zweiten Funktion eine zusätzliche Zuhaltung dar. Dies stellt nicht nur ein weiteres Hindernis und Zeitverlust beim Picking dar, sondern widerspricht auch der ersten Funktion des Verriegelungselementes, gemäß welcher das Verriegelungselement als ein Sicherheitselement agiert, das verhindert, dass die Zuhaltungen nacheinander gepickt werden können, weil das Verriegelungselement nur in alle sortierte Zuhaltungen gleichzeitig einfahren kann.

Somit stellt das Verriegelungselement im Sinne der Erfindung eine zumindest verdoppelte, vorteilhafterweise beinahe unüberwindbare, Einbruchssicherheit, insbesondere beim Picking, dar, da in der ersten Funktion des Verriegelungselementes eine Freigabe des Schließzylinders zum Drehen durch das Verriegelungselement nur dann möglich ist, wenn alle Zuhaltungen sortiert sind und in der zweiten Funktion des Verriegelungselementes, eine Freigabe des Schließzylinders durch eine Zuhaltung nur dann möglich ist, wenn das Verriegelungselement sortiert ist. Mit anderen Worten ermöglicht die Erfindung, dass das Verriegelungselement gemäß den beiden Funktionen nicht zugleich auf eine unberechtigte Weise betätigt werden kann. Vorteilhafterweise können diese beiden Funktionen des Verriegelungselementes nur dann berechtigterweise ausgeführt werden, wenn ein passender Schlüssel im Zylinderkern aufgenommen ist, sodass alle Zuhaltungen sortiert sind und die Sicherheitsnut bzw. alle Sicherheitsnuten an den Zuhaltungen in die radiale Richtung des Zylinderkerns gesehen gegenüber dem Verriegelungselement liegen.

Erfindungsgemäß ist vorsehen, dass am Zylindergehäuse jeweils eine Arretiernut für jede Zuhaltung oder eine gemeinsame Arretiernut für alle Zuhaltungen ausgebildet ist, in die die Zuhaltung oder die Zuhaltungen einfahrbar ist/sind, um den Zylinderkern mit dem Zylindergehäuse zu verrasten, wenn kein passender Schlüssel im Zylinderkern eingeführt ist, wobei die Arretiernut derart ausgebildet ist, dass bei der in die Arretiernut eingefahrene Zuhaltung ein zweites Spiel zwischen der Zuhaltung und der Arretiernut entsteht. Aufgrund dieses zweiten Spiels kann die Zuhaltung immer noch auf Abstand zu einer entsprechenden Gehäusekante in der Arretiernut gehalten werden, und zwar sogar dann, wenn das Verriegelungselement bereits gepickt wäre. Ein Einbrecher kann somit trotz eines Einfahrens des Verriegelungselementes in die Sicherheitsnut an der Zuhaltung keine haptische Rückmeldung über ein Zusammenspiel dieser Zuhaltung mit der Arretiernut erhalten. Mit anderen Worten bliebe die Zuhaltung aufgrund des zweiten Spiels immer noch ungepickt. Folglich müsste die Zuhaltung in einem weiteren Schritt separat gepickt werden. Dies erschwert und verlangsamt das Picking erheblich.

Das zweite Spiel kann dadurch gebildet werden, dass die Breite der Arretiernut am Zylindergehäuse größer gewählt werden kann als die Breite der Zuhaltung im Kopfbereich der Zuhaltung. Das zweite Spiel kann dabei durch einen Freiraum mit einem seitlichen Abstand (gebildet durch die Differenz der Breite der Arretiernut minus die Breite der Zuhaltung im Kopfbereich) zwischen der Arretiernut und der eingefahrenen Zuhaltung gebildet werden, wobei insbesondere zur Bestimmung des seitlichen Abstands vom zweiten Spiel die eingefahrene Zuhaltung mit einer Seite an einer Seite der Arretiernut anliegt. Das zweite Spiel kann vorzugsweise kleiner 2 mm, bevorzugt kleiner 1 mm, besonders bevorzugt kleiner 500 µm und idealerweise kleiner 300 µm ausgewählt sein.

Das zweite Spiel bewirkt außerdem, dass zum Picken der Zuhaltung eine deutlich weitere Drehung des Zylinderkerns erforderlich ist als mit einer Arretiernut ohne ein zweites Spiel, wodurch ein Handhaben des Einbruchswerkzeugs erheblich erschwert wird, weil ein Brecher mehrere fein abgepasste Bewegungen über weite Distanzen ausführen muss. Dadurch, dass eine weite Drehung des Zylinderkerns erforderlich ist, um die Zuhaltung zu picken, wird außerdem die Wahrscheinlichkeit erheblich reduziert und vorzugsweise sogar eliminiert, dass das Verriegelungselement vor der Zuhaltung gepickt werden kann, weil eine volle Drehung des Zylinderkerns nur bei Zusammenspiel des Verriegelungselementes mit allen sortierten Zuhaltungen möglich ist. Durch das zweite Spiel können somit die erste Funktion und die zweite Funktion des Verriegelungselementes auf eine vorteilhafte Weise derart unterstützt bzw. verstärkt werden, sodass sich die beiden Funktionen ohne einen passenden Schlüssel beinahe ausschließen können. Beim Verwenden des passenden Schlüssels bleiben die beiden Spiele im Sinne der Erfindung ungenutzt. Beim Verwenden des passenden Schlüssels können das Verriegelungselement mittig und somit reibungslos in die Sicherheitsnut an der jeweiligen Zuhaltung und die jeweilige Zuhaltung mittig und somit reibungslos in die Arretiernut am Zylindergehäuse einfahren.

Weiterhin kann die Erfindung bei einer Schließvorrichtung vorsehen, dass jede Zuhaltung eine entsprechende Sicherheitsnut zum Aufnehmen des Verriegelungselementes aufweist, wobei insbesondere das radial bewegbare Verriegelungselement nur dann in die Sicherheitsnuten an den Zuhaltungen einfahrbar ist, wenn alle Zuhaltungen durch einen passenden Schlüssel im Zylinderkern sortiert sind. Dadurch kann ermöglich werden, dass das Verriegelungselement in seine Längserstreckungsrichtung gesehen kippfrei bewegt und in einer Betriebsstellung zuverlässig gehalten werden kann, in der das Verriegelungselement in den Sicherheitsnuten an den sortierten Zuhaltungen aufgenommen wird. Dadurch kann nicht nur eine stabile Betätigung, sondern auch eine einfache Montage des Verriegelungselementes innerhalb des Zylindergehäuses ermöglicht werden. Außerdem kann dadurch die erste Funktion des Verriegelungselementes als ein Sicherheitselement verstärkt werden, weil das Verriegelungselement mit allen Zuhaltungen über die jeweilige Sicherheitsnut verbindbar sein kann, wenn alle Zuhaltungen durch einen passenden Schlüssel sortiert sind.

Des Weiteren kann die Erfindung bei einer Schließvorrichtung vorsehen, dass das radial bewegbare Verriegelungselement zwischen zumindest zwei Stellungen bewegbar ist, nämlich: einer Betriebsstellung, in welcher das radial bewegbare Verriegelungselement durch eine Drehung des Zylinderkerns in die Sicherheitsnuten an den Zuhaltungen einfahrbar ist, wenn alle Zuhaltungen sortiert sind, und einer Verriegelungsstellung, in welcher das radial bewegbare Verriegelungselement von mindestens einer Sicherheitsnut mindestens einer Zuhaltung losgelöst ist. Dadurch kann ermöglich werden, dass das Verriegelungselement nur eine bestimmte Bewegung, vorzugsweise ausschließlich parallel zu seiner Erstreckungsachse und bevorzugt zur Erstreckungsachse des Zylinderkern, hin und zurück zwischen der Betriebsstellung und der Verriegelungsstellung ausführen kann. Dadurch kann die Betätigung des Verriegelungselementes stabil ausgeführt werden. Außerdem kann dadurch die erste Funktion des Verriegelungselementes als ein Sicherheitselement noch weiter verstärkt werden.

Zudem kann die Erfindung bei einer Schließvorrichtung vorsehen, dass das Verriegelungselement eine Längserstreckung aufweist, die parallel zu einer Längserstreckung des Zylinderkerns verläuft. Somit kann sichergestellt werden, dass das Verriegelungselement mit mehreren, vorzugsweise allen Zuhaltungen in einen Wirkeingriff gebracht werden kann, wenn die Zuhaltungen durch einen passenden Schlüssel im Zylinderkern sortiert sind.

Außerdem kann die Erfindung bei einer Schließvorrichtung vorsehen, dass das Verriegelungselement federelastisch, vorzugsweise durch zwei endseitlich angeordnete Federelemente, in eine radiale Richtung aus dem Zylinderkern zum Zylindergehäuse vorgespannt ist. Somit kann ermöglicht werden, dass das Verriegelungselement durch eine Drehung des Zylinderkerns betätigt werden kann. Bei einer Drehung des Zylinderkerns zurück und nach dem Abziehen des passenden Schlüssels kann das Verriegelungselement durch die Wirkung der Federkraft der Federelemente automatisch in seine Verriegelungsstellung überführt werden. Die Lagerung von zwei Federn, vorzugsweise innerhalb des Zylinderkerns, gestaltet sich einfach und ohne großen Montageaufwand.

Ferner kann im Rahmen der Erfindung bei einer Schließvorrichtung vorgesehen sein, dass die Zuhaltungen federelastisch in zumindest eine Richtung aus dem Zylinderkern zum Zylindergehäuse vorgespannt sind. Somit kann ermöglicht werden, dass die Zuhaltungen entgegen der Federkraft sortiert werden können, wobei nach dem Abzug des passenden Schlüssels aus dem Zylinderkern die Zuhaltungen automatisch mithilfe der Federkraft in die Arretierposition zurückfallen können, in der sie die Drehung des Zylinderkerns gegenüber dem Zylindergehäuses verhindern.

Weiterhin kann die Erfindung vorsehen, dass die Zuhaltungen abwechselnd in alternierende, vorzugsweise entgegengesetzte, Richtungen federelastisch vorgespannt sind. Durch alternierende Richtungen kann die Kodierungsfreiheit durch die Schließvorrichtung erweitert werden. Außerdem kann dadurch die Einbruchssicherheit der Schließvorrichtung erhöht werden, weil ein Picking in unterschiedliche Richtungen erfolgen muss.

Des Weiteren kann die Erfindung bei einer Schließvorrichtung vorsehen, dass mindestens eine Zuhaltung durch mindestens ein, vorzugsweise seitlich zu einem Schlüsselkanal im Zylinderkern angeordnetes, Federelement in eine im Wesentlichen tangentiale Richtung zum Zylinderkern vorgespannt ist. Somit kann jede Zuhaltung einzeln federbelastet werden, wobei die entsprechende Feder dazu vollständig im Zylinderkern positioniert werden kann. Dadurch kann der Aufbau und die Montage der Schließvorrichtung vereinfacht werden.

Zudem ist es im Rahmen der Erfindung bei einer Schließvorrichtung denkbar, dass jede Zuhaltung ein, vorzugsweise seitlich zu einem Schlüsselkanal im Zylinderkern angeordnetes, Federelement aufweist. Dadurch kann beim Picking eine haptische Unterscheidung zwischen einem Anschlag der Zuhaltung am Gehäuse durch ein Drehen des Zylinderkerns und durch radiales Bewegen der Zuhaltung selbst erschwert werden. Außerdem bewirkt ein seitlich angeordnetes Federelement, dass die Zuhaltung nur in eine bestimmte Drehrichtung gepickt werden kann. Vorzugsweise können die Zuhaltungen in abwechselnde tangentiale Richtungen federbelastet sein, sodass sich die Drehrichtung, in die die jeweilige Zuhaltung gepickt werden kann, von Zuhaltung zu Zuhaltung ändert. Somit kann das Picking der Zuhaltungen noch weiter erschwert werden.

Außerdem ist es im Rahmen der Erfindung bei einer Schließvorrichtung denkbar, dass die Federelemente aller Zuhaltungen von einer Seite (d.h. von derselben Seite) zum Schlüsselkanal im Zylinderkern gelagert sind. Somit kann die Montage der Federelemente innerhalb des Zylinderkerns vereinfacht werden. Außerdem kann somit die Montage des Zylinderkerns mit eingedrückten Zuhaltungen im Zylindergehäuse erleichtert werden.

Darüber hinaus kann die Erfindung bei einer Schließvorrichtung vorsehen, dass die Federelemente aller Zuhaltungen parallel zueinander und parallel zur Erstreckungsebene des Schlüsselkanals angeordnet sind. Dadurch kann die Montage der Federelemente innerhalb des Zylinderkerns und die Montage des Zylinderkerns mit eingedrückten Zuhaltungen im Zylindergehäuse spürbar vereinfacht werden.

Ferner kann im Rahmen der Erfindung bei einer Schließvorrichtung vorgesehen sein, dass mindestens eine Zuhaltung an einem Kopfbereich mindestens einen Hinterschnitt aufweist, welcher mit einem Rampenabschnitt der Arretiernut in eine mechanische Wirkverbindung, insbesondere eine Rastverbindung, bringbar ist. Durch den Hinterschnitt kann erreicht werden, dass die Zuhaltung am Zylindergehäuse verkanten kann, wenn das Verriegelungselement in die Sicherheitsnut an der Zuhaltung eingreift, jedoch kein passender Schlüssel benutzt wird. Dadurch kann das Picking erheblich erschwert werden.

Weiterhin kann die Erfindung bei einer Schließvorrichtung vorsehen, dass die Zuhaltung links und rechts an einem Kopfbereich, vorzugsweise an jeder Ecke, einen Hinterschnitt aufweist. Somit kann an jeder Ecke ein Verkanten der Zuhaltungen am Gehäuse sichergestellt werden, wenn kein passender Schlüssel benutzt wird. Eine solche Zuhaltung kann zudem für unterschiedliche Kodierungen eingesetzt werden, die in unterschiedliche Richtungen erfolgen können.

Des Weiteren kann im Rahmen der Erfindung bei einer Schließvorrichtung vorgesehen sein, dass die Zuhaltung, insbesondere ein Hinterschnitt der Zuhaltung, mindestens eine Rastnase aufweist, welche an einem Auffangabschnitt der Arretiernut, insbesondere des Rampenabschnitts, zur Auflage kommt, wenn das Verriegelungselement in die Sicherheitsnut an der Zuhaltung eingreift, jedoch kein passender Schlüssel benutzt wird. Durch die Rastnase und den Auffangabschnitt kann die Zuhaltung beim unberechtigten Picking eine Rastverbindung mit dem Gehäuse herstellen, wodurch die Zuhaltung trotz jeglicher Manipulation zuverlässig in der Arretierposition gehalten wird.

Zudem kann im Rahmen der Erfindung bei einer Schließvorrichtung vorgesehen sein, dass die Zuhaltung, insbesondere ein Hinterschnitt der Zuhaltung, mindestens einen Einschnitt aufweist, um ein Überführen der Zuhaltung, insbesondere der Rastnase der Zuhaltung, auf einen Auffangabschnitt der Arretiernut, insbesondere des Rampenabschnitts, zu erleichtern. Somit kann eine haptische Rückmeldung beim Picking der Zuhaltung verringert werden und ein Verkanten, insbesondere ein Verrasten, der Zuhaltung am Gehäuse beim unberechtigten Eingriff unterstützt werden.

Außerdem kann im Rahmen der Erfindung bei einer Schließvorrichtung vorgesehen sein, dass das Zylindergehäuse in Form einer Überlasthülse ausgebildet ist, um im Falle einer gewaltsamen Manipulation der Schließvorrichtung eine mechanische Wirkverbindung zum Schließmechanismus des Fahrzeuges zu unterbrechen, wobei insbesondere das Zylindergehäuse mindestens eine, vorzugsweise zwei, stirnseitig angeordnete Aushebenschrägen aufweist, die das Zylindergehäuse von einem Statorgehäuse, insbesondere von einem Blockierelement des Statorgehäuses, drehbar entkoppeln. Somit kann eine Überlastsicherung innerhalb der Schließvorrichtung realisiert werden. Eine gewaltsame Drehung des Zylinderkerns kann dabei bewirken, dass das Zylindergehäuse durch unsortierte Zuhaltungen mit dem Zylinderkern mitgerissen und eine mechanische Wirkverbindung zwischen dem Zylinderkern und dem Schließmechanismus des Fahrzeuges getrennt wird. Im Falle einer gewaltsamen Manipulation der Schließvorrichtung kann dadurch ein Eindringen in das Innere des Fahrzeuges zuverlässig verhindert werden.

Ferner kann im Rahmen der Erfindung bei einer Schließvorrichtung vorgesehen sein, dass ein Statorgehäuse vorgesehen ist, in welchem das Zylindergehäuse drehbar aufgenommen ist, und/oder dass das Statorgehäuse ein drehfest gelagertes Blockierelement aufweist, welches in einer mechanischen Wirkverbindung mit dem Schließmechanismus des Fahrzeuges steht, wobei im Normalbetrieb der Schließvorrichtung das Zylindergehäuse am Blockierelement drehfest abgestützt ist, und wobei im Überlastbetrieb der Schließvorrichtung das Zylindergehäuse durch ein gewaltsames Drehen vom Blockierelement drehbar entkoppelbar ist. Ein Statorgehäuse ermöglicht somit vorteilhafterweise eine Drehung des Zylindergehäuses zusammen mit dem Zylinderkern im Überlastbetrieb der Schließvorrichtung.

Weiterhin kann die Erfindung vorsehen, dass das Blockierelement längsverschieblich im Statorgehäuse gelagert ist, wobei vorzugsweise das Blockierelement mindestens eine, vorzugsweise zwei, stirnseitig angeordnete Blockiernuten für mindestens eine, vorzugsweise zwei, Aushebeschrägen am Zylindergehäuse aufweist. Dadurch kann das Blockierelement weg vom Zylindergehäuse verschoben werden und mit sich ein Kupplungselement zum Schließmechanismus des Fahrzeuges weg vom Zylinderkern ziehen, sodass keine Betätigung des Schließmechanismus des Fahrzeuges durch Drehen des Zylinderkerns mehr möglich ist. Durch ein längsverschiebliches Blockierelement kann eine axiale Überlastsicherung realisiert werden. Eine axiale Überlastsicherung kann im Überlastfall auf eine vorteilhafte Weise eine zuverlässige Unterbrechung der Übertragungskette zwischen dem Zylinderkern und dem Schließmechanismus des Fahrzeuges ermöglichen.

Des Weiteren kann die Erfindung vorsehen, dass jede Zuhaltung eine Schlüsselöffnung für einen Schlüssel aufweist, wobei im Bereich der Schlüsselöffnung mindestens ein individueller Mitnehmer für einen passenden Schlüssel ausgebildet ist, wobei insbesondere der Mitnehmer zum Herstellen mindestens einer Kodierung für mindestens eine Kodierbahn an einem Schlüssel ausgebildet ist. Die Schlüsselöffnung in der Zuhaltung kann eine rechteckige Form aufweisen, wobei der Mitnehmer von Zuhaltung zu Zuhaltung an unterschiedlichen Seiten der rechteckigen Schlüsselöffnung ausgebildet sein kann. Abwechselnd angeordnet ermöglichen solche Zuhaltungen eine Wechselwirkung mit einem Schlüssel, der eine, zwei, drei oder vier Kodierbahnen aufweisen kann. Die Kodierbahnen können wiederum eine oder zwei aktive Kodierseiten aufweisen, je nachdem ob ein Wendeschlüssel oder ein Nichtwendeschlüssel erwünscht ist. Somit kann das Einsatzgebiet der erfindungsgemäßen Schließvorrichtung erweitert werden. Mit einer wachsenden Anzahl an aktiven Kodierseiten an einem Schlüssel kann außerdem die Kodierungsfreiheit innerhalb der Schließvorrichtung erhöht werden.

Zudem kann die Erfindung vorsehen, dass zwei gleiche Sätze an Zuhaltungen vorgesehen sind, von denen die Zuhaltungen abwechselnd in alternierende, vorzugsweise entgegengesetzte, Richtungen im Zylindergehäuse anordbar sind. Somit kann ein Wendeschlüssel realisiert werden.

Außerdem kann im Rahmen der Erfindung bei einer Schließvorrichtung vorgesehen sein, dass mindestens eine Zuhaltung aus einem Material hoher Härte, insbesondere aus einem gehärteten Stahl, ausgebildet ist. Somit kann ein Einführen eines Bohrwerkzeuges, zwecks Zerstören der Zuhaltungen im Bereich des Schlüsselkanals erschwert werden.

Ferner kann im Rahmen der Erfindung bei einer Schließvorrichtung vorgesehen sein, dass mindestens eine Zuhaltung kodierfrei als ein Verstärkungselement ausgebildet ist, wobei insbesondere im Normalbetrieb der Schließvorrichtung das Verstärkungselement durch ein Verschlusselement drehfest am Zylindergehäuse haltbar ist, und wobei im Überlastbetrieb der Schließvorrichtung das Verstärkungselement durch ein Verschlusselement für eine Drehung freigegeben wird, und/oder dass das Verstärkungselement als eine Schließkappe für den Zylinderkern ausgebildet ist. Grundsätzlich kann eine beliebige Zuhaltung als ein Verstärkungselement ausgeführt sein. Ein Verstärkungselement bewirkt, dass beim Hineinbohren in den Schlüsselkanal, das Bohrwerkzeug nicht weiter als bis zum Verstärkungselement vordringt. Das Verstärkungselement wird auf dem Bohraufsatz stecken bleiben und anfangen, sich mit dem Bohraufsatz zu drehen, ohne dass der Bohraufsatz weiter ins Innere des Zylinderkerns eindringen kann. Somit kann die Schließvorrichtung gegenüber Manipulationen durch ein Bohrwerkzeug geschützt werden.

Weitere Maßnahmen und Vorteile sowie technische Merkmale der Erfindung ergeben sich aus den Ansprüchen, der nachfolgenden Beschreibung und den Zeichnungen. Dabei können unterschiedliche Merkmale für sich alleine und in einer beliebigen Kombination vorteilhaft sein, ohne den Rahmen der Erfindung zu verlassen, wie in den Ansprüchen definiert wird. In den nachstehenden Figuren ist die erfindungsgemäße Schließvorrichtung in mehreren Ausführungsbeispielen detailliert dargestellt. Es zeigen:
- Fig. 1: eine Explosionsdarstellung einer erfindungsgemäßen Schließvorrichtung,
- Fig. 2: eine vergrößerte Darstellung eines Zylindergehäuses und eines Zylinderkerns im Sinne der Erfindung,
- Fig. 3: eine vergrößerte Darstellung einer Zuhaltung im Sinne der Erfindung,
- Fig. 4a: eine Schnittdarstellung einer bekannten Schließvorrichtung beim Picking durch ein Drehen eines Zylinderkerns,
- Fig. 4b: eine Schnittdarstellung einer bekannten Schließvorrichtung beim Picking durch ein Verschieben einer Zuhaltung,
- Fig. 4c: eine Schnittdarstellung einer bekannten Schließvorrichtung beim Picking mit der gepickten Zuhaltung,
- Fig. 5: eine Schnittdarstellung einer erfindungsgemäßen Schließvorrichtung,
- Fig. 6: eine Schnittdarstellung einer erfindungsgemäßen Schließvorrichtung beim Drehen in eine Drehrichtung,
- Fig. 7: eine Schnittdarstellung einer erfindungsgemäßen Schließvorrichtung beim Drehen in eine andere Drehrichtung mit einem gepickten Verriegelungselement,
- Fig. 8: eine Schnittdarstellung einer erfindungsgemäßen Schließvorrichtung mit einer gepickten Zuhaltung,
- Fig. 9: eine Schnittdarstellung einer erfindungsgemäßen Schließvorrichtung beim Drehen in eine Drehrichtung, in die eine Zuhaltung gepickt werden kann,
- Fig. 10: eine Schnittdarstellung einer erfindungsgemäßen Schließvorrichtung beim Drehen in dieselbe Drehrichtung der Figur 9, in die aber eine nachfolgende Zuhaltung nicht gepickt werden kann,
- Fig. 11: eine beispielhafte Darstellung einer erfindungsgemäßen Schließvorrichtung, und
- Fig. 12: eine beispielhafte Darstellung einer erfindungsgemäßen Schließvorrichtung.

In den nachfolgenden Figuren werden für die gleichen technischen Merkmale auch von unterschiedlichen Ausführungsbeispielen die identischen Bezugszeichen verwendet.

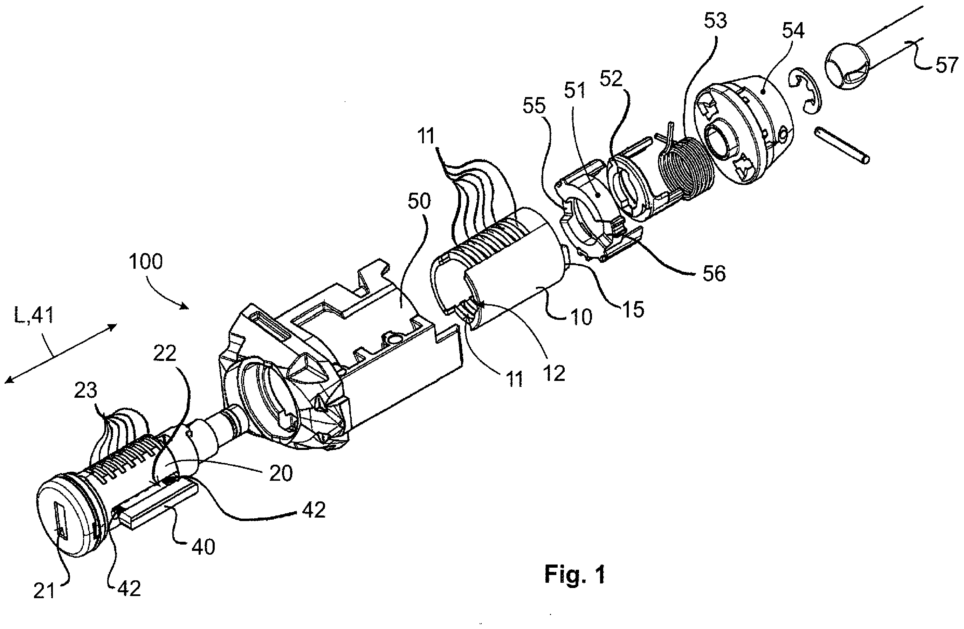

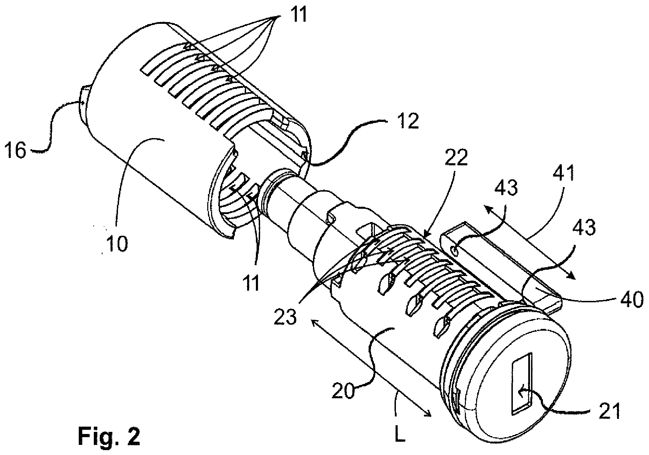

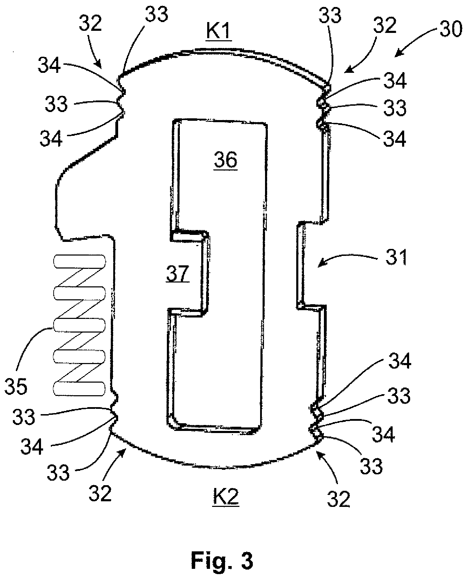

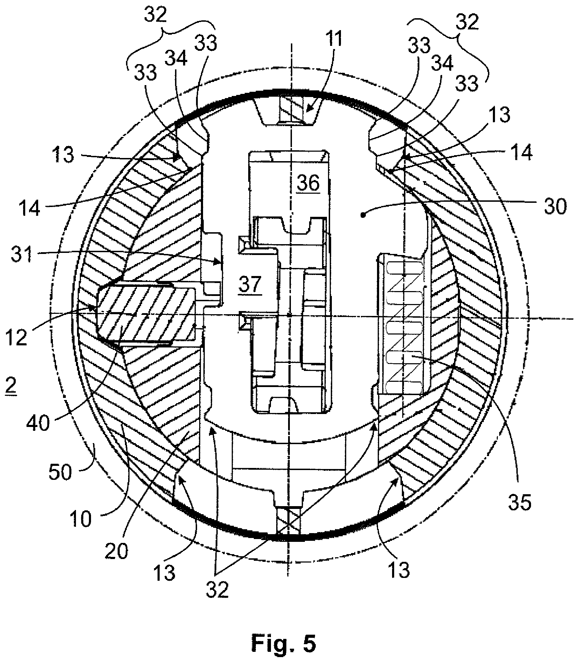

In den Figuren 1 und 2 ist eine Schließvorrichtung 100 im Sinne der Erfindung gezeigt, die zum Betätigen eines Schließmechanismus eines Fahrzeuges dient. Die Schließvorrichtung 100 ist mit einem Zylindergehäuse 10 ausgeführt, in welchem ein Zylinderkern 20 drehbar aufgenommen ist. In der Figur 1 ist das Zylindergehäuse 10 lediglich beispielhaft als eine Überlasthülse mit Überlastschrägen 15, 16 gezeigt, die in einem Statorgehäuses 50 drehbar aufgenommen ist. Auf die Überlastsicherung wird im Folgenden im Detail Bezug genommen. Grundsätzlich kann ein Zylindergehäuse 10 im Sinne der Erfindung auch ohne eine Überlastsicherung ausgebildet sein. Zwischen dem Zylindergehäuse 10 und dem Zylinderkern 20 sind mehrere axial nacheinander angeordnete, radial bewegbare Zuhaltungen 30 angeordnet, die im Nachfolgenden in den Figuren 5 bis 10 gezeigt sind. Eine Zuhaltung 30 ist außerdem in einer vergrößerten Alleinstellung in der Figur 3 gezeigt. Der Zylinderkern 20 verfügt über einen Schlüsselkanal 21, durch welchen ein Schlüssel eingeführt werden kann, um die Zuhaltungen zu sortieren.

Die Zuhaltungen 30 sind im Zylinderkern 20 bewegbar zwischen zwei Positionen I, II aufgenommen, nämlich einer Freigabeposition I, in welcher die Zuhaltungen 30 durch einen passenden Schlüssel im Zylinderkern 20 sortierbar sind, um den Zylinderkern 20 vom Zylindergehäuse 10 drehbar zu entkoppeln, und einer Arretierposition II, in welcher die Zuhaltungen 30 nach dem Abzug des passenden Schlüssels aus dem Zylinderkern 20 mit dem Zylindergehäuse 10 verrastbar sind, um den Zylinderkern 20 an das Zylindergehäuse 10 drehfest zu koppeln.

Die Zuhaltungen 30 sind radial verschieblich in Führungsnuten 23 im Zylinderkern 20 aufgenommen. Die Zuhaltungen 30 können in der Freigabeposition I komplett in die Führungsnuten 23 im Zylinderkern 20 eintauchen. In der Arretierposition II stehen die Zuhaltungen 30 aus den Führungsnuten 23 im Zylinderkern 20 hervor und greifen in Arretiernuten 11 am Zylindergehäuse 10 ein.

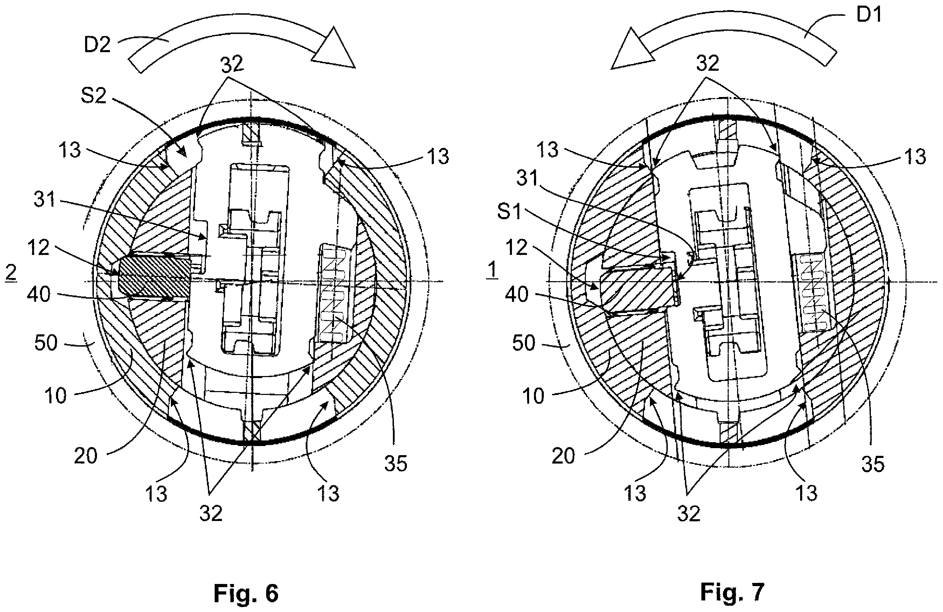

Wie es die Figuren 1 und 2 weiterhin zeigen, ist zwischen dem Zylindergehäuse 10 und dem Zylinderkern 20 mindestens ein radial bewegbares Verriegelungselement 40 oder einfach genannt Verriegelungselement 40 angeordnet, welches durch eine Drehung des Zylinderkerns 20 in eine Drehrichtung D1 in eine Sicherheitsnut 31 an mindestens einer Zuhaltung 30 einfahrbar ist, wie es im Nachfolgenden die Figur 7 beispielhaft zeigt. In eine andere Drehrichtung D2 ist jedoch das Verriegelungselement 40 nicht mit derselben Sicherheitsnut 31 derselben Zuhaltung 20 verbindbar, wie es im Nachfolgenden die Figur 6 zeigt.

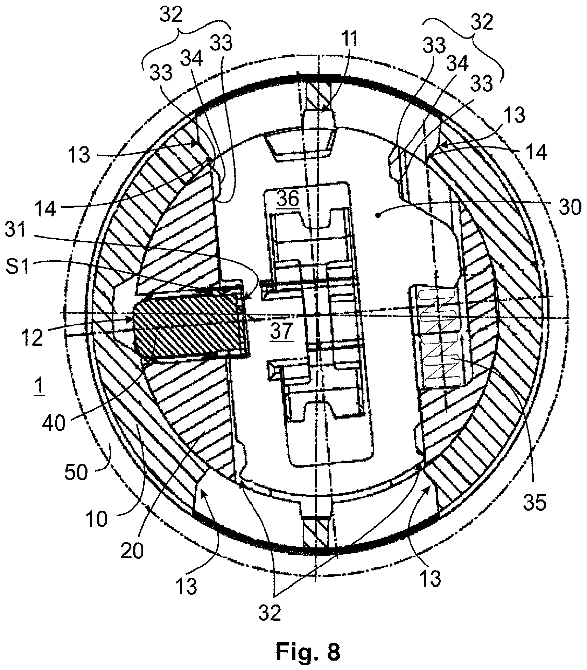

Das Verriegelungselement 40 ist zwischen zwei Stellungen 1, 2 bewegbar, nämlich einer Betriebsstellung 1, in welcher das Verriegelungselement 40 durch eine Drehung des Zylinderkerns 20 in die Sicherheitsnuten 31 an den Zuhaltungen 30 einfahrbar ist, wenn die Zuhaltungen 30 sortiert sind (s. hierzu bspw. Figuren 7 und 8), und einer Verriegelungsstellung 2, in welcher das Verriegelungselement 40 von mindestens einer Sicherheitsnut 31 mindestens einer Zuhaltung 30 losgelöst ist (s. hierzu bspw. die Figuren 5 und 6).

Wie es die Figuren 1 und 2 ferner zeigen, ist das Verriegelungselement 40 in einer Führungsnut 22 im Zylinderkern 20 radial verschieblich aufgenommen. Das Verriegelungselement 40 kann in der Betriebsstellung 1 komplett in der Führungsnut 22 im Zylinderkern 20 eintauchen. In der Verriegelungsstellung 2 steht das Verriegelungselement 40 jedoch aus der Führungsnut 22 im Zylinderkern 20 hervor und greift in eine Verriegelungsnut 12 am Zylindergehäuse 10 ein.

Das Verriegelungselement 40 weist eine Längserstreckung 41 auf, die parallel zu einer Längserstreckung L des Zylinderkerns 20 verläuft. Somit kann sichergestellt werden, dass das Verriegelungselement 40 mit mehreren, bspw. allen, Zuhaltungen 30 gleichzeitig in einen Wirkeingriff gebracht werden kann, wenn die Zuhaltungen 30 durch einen passenden Schlüssel im Zylinderkern 20 sortiert sind.

Das Verriegelungselement 40 ist federelastisch durch zwei in die Längserstreckungsrichtung des Verriegelungselementes 40 gesehen endseitlich angeordnete Federelemente 42 in eine radiale Richtung aus dem Zylinderkern 20 in Richtung zum Zylindergehäuse 10 vorgespannt. Somit kann ermöglicht werden, dass das Verriegelungselement 40 durch eine Drehung des Zylinderkerns 20 entgegen der Wirkung der Federelemente 42 komplett in der Führungsnut 22 im Zylinderkern 20 eintauchen kann, vorausgesetzt jedoch, dass alle Zuhaltungen 30 sortiert sind. Nach dem Abziehen des passenden Schlüssels sorgt die Federkraft der Federelemente 42 wiederum dafür, dass das Verriegelungselement 40 automatisch in seine Verriegelungsstellung 2 überführt wird, in der das Verriegelungselement 40 in die Verriegelungsnut 12 am Zylindergehäuse 10 eingreift.

Wie es in der Figur 2 gezeigt ist, sind die Federelemente 42 an den Federsitzen 43 des Verriegelungselementes 40 abgestützt. An den Federsitzen 43 wird somit die Federkraft in das Verriegelungselement 40 eingeleitet, die das Verriegelungselement 40 in einen Eingriff mit dem Zylindergehäuse 10 belastet. Die Federelemente 42 sowie die Federsitze 43 sind bzgl. der Längserstreckung 41 des Verriegelungselementes 40 endseitig am Verriegelungselement 40 angeordnet.

Wie bereits oben angedeutet, kann das Zylindergehäuse 10, wie es die Figuren 1 und 2 zeigen, in Form einer Überlasthülse ausgebildet sein, um im Falle einer gewaltsamen Manipulation der Schließvorrichtung 100, insbesondere eine gewaltsamen Drehung des Zylinderkerns 20, eine mechanische Wirkverbindung zum Schließmechanismus des Fahrzeuges zu unterbrechen. Hierzu können stirnseitig am Zylindergehäuse 10 mindestens eine, vorzugsweise zwei, stirnseitig angeordnete Aushebeschrägen 15, 16 ausgebildet sein, die in entsprechenden Blockiernuten 55, 56 an einem Blockierelement 51 im Statorgehäuse 50 eingreifen können. Das Blockierelement 51 ist dabei drehfest im Statorgehäuse 50 abgestützt. Allerdings kann das Blockierelement 51 längsverschieblich entgegen einer Federkraft einer Feder 53 betätigt werden. Eine gewaltsame Drehung des Zylinderkerns 20 kann bewirken, dass das Zylindergehäuse 10 durch unsortierte Zuhaltungen 30 mit dem Zylinderkern 20 mitgerissen wird. Die Aushebeschrägen 15, 16 verdrehen sich gegenüber den Blockiernuten 55, 56 und entfernen sich aus den Blockiernuten 55, 56. Dabei drücken die Aushebeschrägen 15, 16 das Blockierelement 51 axial gesehen weg vom Zylinderkern 20. Das Blockierelement 51 ist wiederum über ein Kupplungselement 52 mit einem Mitnehmer 54 für das Schließsystem des Fahrzeuges verbunden, an dem ein Übertragungsglied 57 zum Schließmechanismus des Fahrzeuges abgestützt ist. Zwischen dem Kupplungselement 52 und dem Mitnehmer 54 für das Schließsystem des Fahrzeuges ist die Feder 53 vorgesehen, die im Überlastfall komprimiert werden kann. Im Normalbetrieb der Schließvorrichtung 100 ist der Zylinderkern 20 über das Kupplungselement 52 drehbar an das Übertragungsglied 57 gekoppelt. In einem Überlastfall wird die Feder 53 komprimiert und das Blockierelement 51 mit dem Kupplungselement 52 weg vom Zylinderkern 20 verschoben. Dadurch verliert der Zylinderkern 20 die mechanische Wirkverbindung zum Kupplungselement 52 und somit zum Übertragungsglied 57. Eine gewaltsame Drehung des Zylinderkerns 20 wird somit nicht auf das Übertragungsglied 57 weitergeleitet.

Wie es die Figur 3 am Beispiel einer Zuhaltung 30 zeigt, weist jede Zuhaltung 30 eine Schlüsselöffnung 36 für einen Schlüssel auf, wobei im Bereich der Schlüsselöffnung 36 mindestens ein individuell ausgestalteter Mitnehmer 37 für einen passenden Schlüssel ausgebildet sein kann. Der Mitnehmer 37 kann im Rahmen der Erfindung zum Herstellen mindestens einer Kodierung für mindestens eine Kodierbahn an einem Schlüssel ausgebildet sein. Die Schlüsselöffnung 36 in der Zuhaltung 30 kann eine rechteckige Form aufweisen, wobei der Mitnehmer 37 von Zuhaltung 30 zu Zuhaltung 30 an unterschiedlichen Stellen und/oder Seiten der rechteckigen Schlüsselöffnung 36 ausgebildet sein kann, je nachdem ob ein Schlüssel mit einer, zwei, drei oder vier Kodierbahnen benutzt werden soll. Die Kodierbahnen an einem gewünschten Schlüssel können wiederum eine oder zwei aktive Kodierseiten aufweisen, je nachdem ob ein Wendeschlüssel oder ein Nichtwendeschlüssel erwünscht ist. Somit kann das Einsatzgebiet der erfindungsgemäßen Schließvorrichtung 100 flexibel gestaltet werden. Bei einem Wendeschlüssel können zwei Kodierbahnen symmetrisch ausgebildet sein, wobei nur eine Seite solcher Kodierbahnen zum Mitnehmen der jeweiligen Zuhaltung 30 ausgebildet sein muss. Die Zuhaltungen 30 für einen Wendeschlüssel können in zwei gleich ausgebildeten Sätzen bereitgestellt werden, von denen die Zuhaltungen 30 abwechselnd in alternierende, bspw. entgegengesetzte (s. bspw. die Figuren 5 und 6), Richtungen im Zylindergehäuse 10 angeordnet sein können.

Wie es weiterhin die Figur 3 zeigt, sind die Zuhaltungen 30 im Rahmen der Erfindung federelastisch in zumindest eine oder mehrere, bspw. entgegengesetzte, Richtungen, aus dem Zylinderkern 20 zum Zylindergehäuse 10 vorgespannt. Hierzu ist für jede Zuhaltung 30 ein Federelement 35 vorgesehen. Die Zuhaltungen 30 können entgegen der Federkraft sortiert werden, wobei nach dem Abzug des passenden Schlüssels aus dem Zylinderkern 20 die Zuhaltungen 30 automatisch mithilfe der Federkraft in die Arretierposition II zurückverfahren können, in der sie den Zylinderkern 20 drehfest an das Zylindergehäuse 10 koppeln. Gemäß einer möglichen Ausführungsform der Erfindung, die anhand der Figuren 6 und 6 sowie 9 und 10 erkennbar ist, können die Zuhaltungen 30 abwechselnd in alternierende, vorzugsweise entgegengesetzte, Richtungen federelastisch vorgespannt sein.

Durch entgegengesetzte Richtungen der Zuhaltungen 30 kann eine Schließvorrichtung 100 zur Verwendung mit einem Wendeschlüssel bereitgestellt werden.

Die Federelemente 35 der Zuhaltungen 30 können dabei seitlich, vorzugsweise von derselben Seite bezüglich der Schlüsselöffnung 36 angeordnet sein. Dabei kann man von einer tangentialen Erstreckung der Federelemente 35 zum Zylinderkern 20 sprechen. Somit kann die Montage der Federelemente 35 innerhalb des Zylinderkerns 20 vereinfacht werden. Außerdem kann somit die Montage des Zylinderkerns 20 mit eingedrückten Zuhaltungen 30 im Zylindergehäuse 10 erleichtert werden. Weiterhin ist es denkbar, dass die Federelemente 35 aller Zuhaltungen 30 parallel zueinander und parallel zur Erstreckungsebene des Schlüsselkanals 21 angeordnet sein können, was die Montage des Zylinderkerns 20 mit eingedrückten Zuhaltungen 30 im Zylindergehäuse 10 noch weiter erleichtern kann.

Wie es außerdem aus der Figur 3 zu erkennen ist, können die Zuhaltungen 30 an mindestens einem, vorzugsweise an beiden Kopfbereichen K1, K2 jeweils einen Hinterschnitt 32 aufweisen, welcher mit einem korrespondierenden Rampenabschnitt 13 der Arretiernut 11 in eine mechanische Wirkverbindung, insbesondere eine Rastverbindung R, bringbar ist, wie es in der Figur 7 gezeigt ist. Zudem kann an jedem Hinterschnitt 32 der jeweiligen Zuhaltung 30 mindestens eine Rastnase 33 ausgebildet sein, welche an einem Auffangabschnitt 14 der Arretiernut 11, insbesondere des Rampenabschnitts 13, zur Auflage kommen kann. Vorteilhafterweise können zwei Rastnasen 33 am Hinterschnitt 32 ausgebildet sein, wodurch das Verkanten der Zuhaltung 20 am Auffangabschnitt 14 der Arretiernut 11 bei Manipulieren der Schließvorrichtung 100 mit einer höheren Wahrscheinlichkeit stattfinden kann. An jedem Hinterschnitt 32 der jeweiligen Zuhaltung 30 kann nach außen gesehen kurz vor der Rastnase 33 ein Einschnitt 34 ausgebildet sein, um ein Überführen der Zuhaltung 30, insbesondere der Rastnase 33 der jeweiligen Zuhaltung 30, auf einen Auffangabschnitt 14 der Arretiernut 11, insbesondere des Rampenabschnitts 13, zu erleichtern.

Der Erfindungsgedanke kann anhand der Figur 5 erklärt werden. Hierzu ist erfindungsgemäß vorgesehen, dass die Sicherheitsnut 31 an mindestens einer Zuhaltung 30 derart ausgebildet ist, dass bei dem in der Sicherheitsnut 31 eingefahrenen Verriegelungselement 40 ein erstes Spiel S1 zwischen dem Verriegelungselement 40 und der Sicherheitsnut 31 entsteht. Das erste Spiel S1 kann dadurch erreicht werden, dass die Breite D der Sicherheitsnut 31 größer gewählt werden kann als die Breite d des Verriegelungselementes 40 im Schnitt durch den Zylinderkern 20 betrachtet. Bei einer Vielzahl von Zuhaltungen 30 kann mindestens eine, mehrere oder vorzugsweise jede, Zuhaltung 30 eine entsprechende Sicherheitsnut 31 aufweisen. Die Sicherheitsnuten 31 können dabei von einer Seite an allen Zuhaltungen 30 ausgebildet sein, die über eine Sicherheitsnut 31 verfügen, damit darin das längliche Verriegelungselement 40 zugleich aufgenommen werden kann. Die Sicherheitsnuten 31 können dabei an der Seite der Zuhaltungen 30 ausgebildet sein, die der Seite gegenüber liegt, an der die jeweiligen Federelemente 35 an den Zuhaltungen 30 abgestützt sind.

Der Erfindungsgedanke liegt dabei darin, das Picking bei einer Schließvorrichtung 100 durch ein entsprechendes Zusammenspiel zwischen den Zuhaltungen 30 und dem Verriegelungselement 40, insbesondere durch das erste Spiel S1 zu erschweren. Das Verriegelungselement 40 agiert in einer ersten Funktion als ein Sicherheitselement und erschwert das Picking per se. Dies geschieht aus dem Grund, dass das Verriegelungselement 40 nur dann vollständig in den Zylinderkern 20 einfahren kann, wenn alle Zuhaltungen 30 sortiert oder im Falle eines Einbruchs gepickt sind. In einer zweiten Funktion sorgt das Verriegelungselement 40 dafür, dass zuerst das Verriegelungselement 40 gepickt werden müsste, damit überhaupt eine Zuhaltung 30 gepickt werden kann, wie es die Figur 7 verdeutlicht.

Das Verriegelungselement 40 kann durch eine Drehung des Zylinderkerns 20 in die Betriebsstellung 1 der Figur 7 eingedrückt werden. Bei einer Zuhaltung 30, die in der Figur 5 gezeigt ist, kann eine Drehung nach rechts in die Drehrichtung D2 kein Picken des Verriegelungselementes 40, geschweige denn der Zuhaltung 30 bewirken. Dies geschieht aus dem Grund, weil die Zuhaltung 30 von der rechten Seite zumindest zum Teil nach links federbelastet ist, um ein Picking der Zuhaltung 30 nur in die Drehrichtung D1 gemäß der Figur 7 zu ermöglichen.

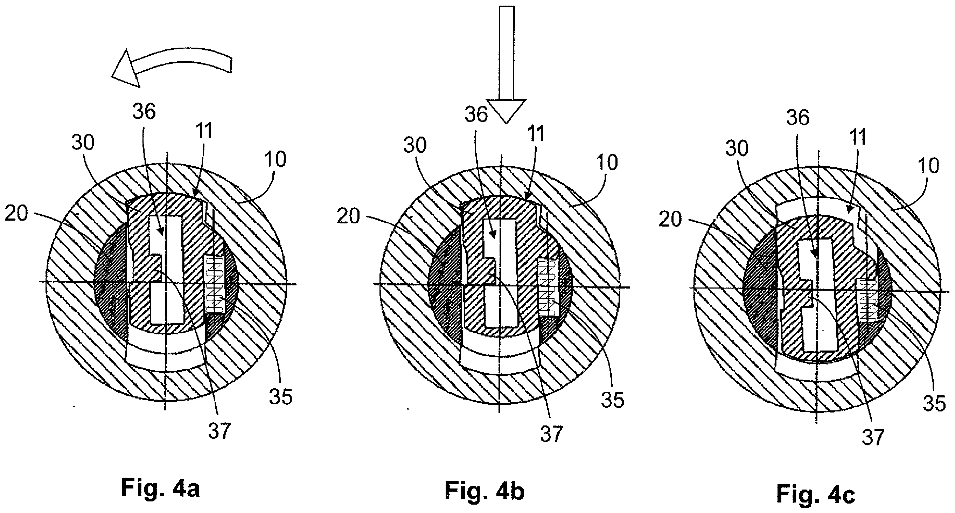

Wie ein Picking funktionieren kann, zeigen die Figuren 4a, 4b und 4c. Hierzu können der Zylinderkern 20 durch ein Pickingwerkzeug leicht hin und her gedreht (s. Figur 4a) und zugleich die jeweilige bzw. jede Zuhaltung 30 hoch und runter bzgl. der Drehachse des Zylinderkerns 20 bewegt werden (s. Figur 4b) bis zwischen der jeweiligen Zuhaltung 30 und der Arretiernut 11 ein Kontakt K ertastet werden kann. Die gepickte Zuhaltung 30 in der Position der Figur 4c muss des Weiteren durch ein Pickingwerkzeug gehalten werden bis alle andere Zuhaltungen 30 ebenfalls gepickt sind.

In Figur 7 ist es ersichtlich, dass sogar bei einer Drehung des Zylinderkerns 20 in die richtige Drehrichtung D1 das erste Spiel S1 innerhalb der Sicherheitsnut 31 an der Zuhaltung 30 immer noch bewirkt, dass zwar das Verriegelungselement 40 in die Sicherheitsnut 31 an der Zuhaltung 30 eingeführt werden kann, der Zylinderkern 20 jedoch durch die Zuhaltung 30 immer noch nicht freigegeben ist (s. Figur 7). Mit anderen Worten ist die Zuhaltung 30 in der Situation gemäß der Figur 7 immer noch nicht gepickt. Hierzu müsste die Zuhaltung 30 in einem weiteren Schritt, wie es die Figur 8 zeigt, separat gepickt werden, bis sie den Zylinderkern freigeben kann.

Das radial bewegbare Verriegelungselement 40 im Sinne der Erfindung stellt somit im Rahmen seiner zweiten Funktion zumindest eine zusätzliche Zuhaltung dar. Dies stellt nicht nur ein weiteres Hindernis und Zeitverlust beim Picking dar, sondern widerspricht auch der ersten Funktion des Verriegelungselementes 40, gemäß welcher das Verriegelungselement 40 als ein Sicherheitselement agiert und nur dann gepickt werden kann, wenn alle Zuhaltungen 30 zugleich sortiert sind.

Somit stellt das Verriegelungselement 40 im Sinne der Erfindung mindestens eine verdoppelte, vorteilhafterweise beinahe unüberwindbare, Einbruchssicherheit, insbesondere beim Picking, dar, da das Verriegelungselement 40 gemäß den beiden Funktionen nicht zugleich auf eine unberechtigte Weise betätigt werden kann. Vorteilhafterweise können diese beiden Funktionen des Verriegelungselementes 40 nur dann berechtigterweise ausgeführt werden, wenn ein passender Schlüssel im Zylinderkern 20 aufgenommen ist, sodass alle Zuhaltungen 30 sortiert sind und die Sicherheitsnut 31 bzw. alle Sicherheitsnuten 31 an den Zuhaltungen 30 in die radiale Richtung des Zylinderkerns 20 gesehen gegenüber dem Verriegelungselement 40 liegen.

Erfindungsgemäß ist die Arretiernut 11 am Zylindergehäuse 10, in die die jeweilige Zuhaltung 30 in der Arretierposition II einfahren kann, derart ausgebildet, dass bei der in die Arretiernut 11 eingefahrenen Zuhaltung 30 mindestens ein zweites Spiel S2 zwischen der Zuhaltung 30 und der Arretiernut 11 entsteht. Aufgrund dieses zweiten Spiels S2 kann die Zuhaltung 30 immer noch auf Abstand zu einer entsprechenden Gehäusekante in der Arretiernut 11 gehalten werden, und zwar sogar dann, wenn das Verriegelungselement 40 bereits gepickt wäre. Ein Einbrecher kann somit trotz eines Einfahrens des Verriegelungselementes 40 in die Sicherheitsnut 31 an der Zuhaltung 30 keine haptische Rückmeldung über ein Zusammenspiel dieser Zuhaltung 30 mit der Arretiernut 11 erhalten. Mit anderen Worten bliebe die Zuhaltung 30 insbesondere aufgrund des zweiten Spiels S2 immer noch ungepickt (s. Figuren 7 und 8). Das zweite Spiel S2 erschwert und verlangsamt das Picking somit erheblich.

Das zweite Spiel S2 bewirkt außerdem, dass zum Picken der Zuhaltung 30 eine deutlich weitere Drehung des Zylinderkerns 20 notwendig ist, als mit einer Arretiernut 11 ohne ein zweites Spiel S2 es der Fall wäre. Dadurch kann ein Handhaben eines Einbruchswerkzeugs erheblich erschwert werden, weil ein Einbrecher mehrere fein abgepasste Bewegungen über weite Distanzen ausführen muss.

Dazu kommt noch, dass die Zuhaltungen 30 an den Kopfbereichen K1, K2 jeweils einen Hinterschnitt 32 aufweisen, welcher mit einem korrespondierenden Rampenabschnitt 13 der Arretiernut 11 innerhalb des Zylindergehäuses 10 in eine mechanische Wirkverbindung, insbesondere eine Rastverbindung R, bringbar ist, sodass die Zuhaltung 30 am Rampenabschnitt 13 verkannten kann. Wie es oben anhand der Figur 3 beschrieben wurde, kann an jedem Hinterschnitt 32 der jeweiligen Zuhaltung 30 mindestens eine Rastnase 33 ausgebildet sein, welche an einem Auffangabschnitt 14 der Arretiernut 11, insbesondere des Rampenabschnitts 13, zur Auflage kommen kann. Vor der Rastnase 33 kann innerhalb der Arretiernut 11 ein Einschnitt 34 ausgebildet sein, um ein Überführen der Zuhaltung 30, insbesondere der Rastnase 33 der jeweiligen Zuhaltung 30, auf den Auffangabschnitt 14 der Arretiernut 11, insbesondere des Rampenabschnitts 13, zu erleichtern.

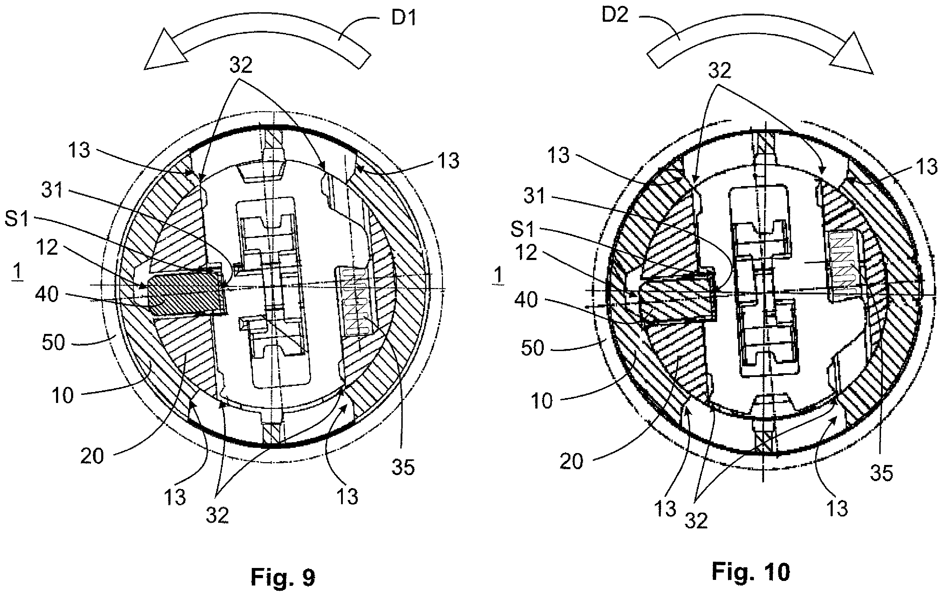

Im dargestellten Beispiel der Erfindung gemäß den Figuren 9 und 10 kommt als ein weiterer Faktor beim Picking dazu, dass die Zuhaltungen 30 abwechselnd in unterschiedliche Richtungen federbelastet sind, sodass eine Zuhaltung 30, wenn überhaupt in eine Drehrichtung D1 (vgl. Figur 7) und die nächste Zuhaltung 30 in dieselbe Drehrichtung D1 (vgl. Figur 6) nicht gepickt werden kann.

Zusammen betrachtet müssten beim Picking mehrere Faktoren überwunden werden, die zugleich nicht realisiert werden können, zumindest nicht durch ein Einbruchswerkzeug. So muss einerseits das Verriegelungselement 40 vor der Zuhaltung 30 gepickt werden, damit die Zuhaltung 30 gepickt werden kann (s. Figur 7). Andererseits kann das Verriegelungselement 40 nur dann gepickt werden, wenn alle Zuhaltungen 30 gepickt sind. Dazu kommen noch unterschiedliche Drehrichtungen D1, D2, in die unterschiedliche Zuhaltungen 30 sortiert werden können (s. Figuren 6 und 7 sowie 9 und 10).

Somit kann eine verbesserte Schließvorrichtung 100 bereitgestellt werden, die eine sichere Betätigung des Schließmechanismus des Fahrzeuges ermöglicht und die eine verbesserte Einbruchssicherheit aufweist.

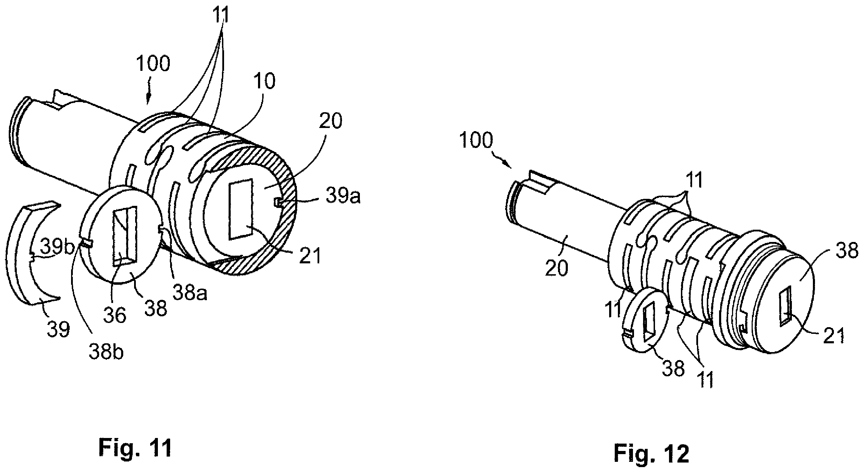

Die Figuren 11 und 12 zeigen weitere vorteilhafte Weiterbildungen einer Schließvorrichtung 100 im Rahmen der Erfindung. Grundsätzlich ist es denkbar, dass mindestens eine Zuhaltung 30 aus einem Material hoher Härte, insbesondere aus einem gehärteten Stahl, ausgebildet sein kann. Somit kann ein Einführen eines Bohrwerkzeuges, zwecks Zerstören der Zuhaltungen 30 im Bereich des Schlüsselkanals 21 im Zylinderkern 20 erschwert werden. Wie die Figur 11 zeigt, kann zudem vorgesehen sein, dass mindestens eine Zuhaltung 30 kodierfrei als ein Verstärkungselement 38 aus einem Material hoher Härte, insbesondere aus einem gehärteten Stahl, ausgebildet sein kann, wobei insbesondere im Normalbetrieb der Schließvorrichtung 100 das Verstärkungselement 38 durch ein Verschlusselement 39 drehfest am Zylindergehäuse 10 haltbar sein kann, und wobei im Überlastbetrieb der Schließvorrichtung 100 das Verstärkungselement 38 durch ein Verschlusselement 39 für eine Drehung freigegeben werden kann. Hierzu ist es denkbar, dass das Verschlusselement 39 und/oder das Zylindergehäuse 10 mindestens ein Verschlussmittel 39a, 39b aufweisen können/kann, welches im Überlastfall durch Wechselwirken mit einem entsprechenden Haltemittel 38a, 38b am Verstärkungselement 38 abbrechen kann. Weiterhin ist es gemäß der Figur 12 denkbar, dass das Verstärkungselement 38 als eine Schließkappe für den Zylinderkern 20 ausgebildet sein kann. Grundsätzlich kann eine beliebige Zuhaltung 30 als ein Verstärkungselement 38 ausgeführt sein. Ein Verstärkungselement 38 bewirkt, dass beim Hineinbohren in den Schlüsselkanal 21 im Zylinderkern 20, das Bohrwerkzeug nicht weiter als bis zum Verstärkungselement 38 vordringt. Das Verstärkungselement 38 wird auf dem Bohraufsatz stecken bleiben und mit dem Bohraufsatz durchdrehen, ohne dass der Bohraufsatz weiter ins Innere des Zylinderkerns 20 eindringen kann. Somit kann die Schließvorrichtung 100 gegenüber Manipulationen durch ein Bohrwerkzeug geschützt werden.

Die voranstehende Erläuterung der Ausführungsformen beschreibt die vorliegende Erfindung ausschließlich im Rahmen von Beispielen. Selbstverständlich können einzelne Merkmale der vorliegenden Erfindung, sofern technisch sinnvoll, frei miteinander kombiniert werden, ohne den Rahmen der vorliegenden Erfindung/Ansprüche zu verlassen, wie in den Ansprüchen definiert wird.

### Bezugszeichenliste

- 100: Schließvorrichtung

- 10: Zylindergehäuse
- 11: Arretiernut
- 12: Verriegelungsnut
- 13: Rampenabschnitt
- 14: Auffangabschnitt
- 15: Aushebenschräge
- 16: Aushebenschräge

- 20: Zylinderkern
- 21: Schlüsselkanal
- 22: Führungsnut für das Verriegelungselement
- 23: Führungsnuten für die Zuhaltungen

- 30: Zuhaltung
- 31: Sicherheitsnut
- 32: Hinterschnitt
- 33: Rastnase
- 34: Einschnitt
- 35: Federelement
- 36: Schlüsselöffnung
- 37: Mitnehmer für die Zuhaltungen
- 38: Verstärkungselement
- 38a: Haltemittel
- 38b: Haltemittel
- 39: Verschlusselement
- 39a: Verschlussmittel
- 39b: Verschlussmittel
- 40: Verriegelungselement
- 41: Längserstreckung
- 42: Federelement
- 43: Federsitz

- 50: Statorgehäuse
- 51: Blockierelement
- 52: Kupplungselement
- 53: Feder
- 54: Mitnehmer für das Schließsystem des Fahrzeuges
- 55: Blockiernut am Blockierelement
- 56: Blockiernut am Blockierelement
- 57: Übertragungsglied zum Schließsystem des Fahrzeuges

- D: Breite der Sicherheitsnut
- d: Breite des Verriegelungselementes
- D1: Drehrichtung
- D2: Drehrichtung

- K: Kontakt
- K1: Kopfbereich
- K2: Kopfbereich

- L: Längserstreckung des Zylinderkerns
- R: Rastverbindung
- S1: erstes Spiel
- S2: zweites Spiel

- I: Freigabeposition
- II: Arretierposition
- 1: Betriebsstellung
- 2: Verriegelungsstellung

## Patentansprüche

1. Schließvorrichtung (100) zum Betätigen eines Schließmechanismus eines Fahrzeuges, mit einem Zylindergehäuse (10),
in welchem ein Zylinderkern (20) drehbar aufgenommen ist,
wobei zwischen dem Zylindergehäuse (10) und dem Zylinderkern (20) mehrere axial nacheinander angeordnete, radial bewegbare Zuhaltungen (30) angeordnet sind,
die in einer Freigabeposition (I) durch einen passenden Schlüssel im Zylinderkern (20) sortierbar sind, um den Zylinderkern (20) vom Zylindergehäuse (10) drehbar zu entkoppeln,
und die in einer Arretierposition (II) nach dem Abzug des passenden Schlüssels aus dem Zylinderkern (20) mit dem Zylindergehäuse (10) verrastbar sind, um den Zylinderkern (20) an das Zylindergehäuse (10) drehfest zu koppeln,
wobei zwischen dem Zylindergehäuse (10) und dem Zylinderkern (20) mindestens ein radial bewegbares Verriegelungselement (40) angeordnet ist, welches durch eine Drehung des Zylinderkerns (20) in eine Sicherheitsnut (31) an mindestens einer Zuhaltung (30) einfahrbar ist,
wobei die Sicherheitsnut (31) der mindestens einen Zuhaltung (30) derart ausgebildet ist, dass bei dem in der Sicherheitsnut (31) eingefahrenen Verriegelungselement (40) ein erstes Spiel (S1) zwischen dem Verriegelungselement (40) und der Sicherheitsnut (31) entsteht,
und wobei am Zylindergehäuse (10) jeweils eine Arretiernut (11) für jede Zuhaltung (30) oder eine gemeinsame Arretiernut (11) für alle Zuhaltungen (30) vorgesehen ist, in die die Zuhaltung (30) oder die Zuhaltungen (30) einfahrbar ist/sind, um den Zylinderkern (20) mit dem Zylindergehäuse (10) zu verrasten, wenn kein passender Schlüssel im Zylinderkern (20) eingeführt ist,
**dadurch gekennzeichnet,**
**dass** die Arretiernut (11) derart ausgebildet ist, dass bei der in die Arretiernut (11) eingefahrenen Zuhaltung (30) mindestens ein zweites Spiel (S2) zwischen der Zuhaltung (30) und der Arretiernut (11) entsteht.

2. Schließvorrichtung (100) nach dem vorhergehenden Anspruch,
**dadurch gekennzeichnet,**
**dass** das erste Spiel (S1) durch einen Freiraum mit einem seitlichen Abstand zwischen der Sicherheitsnut (31) und dem eingefahrenen Verriegelungselement (40) gebildet ist, wobei insbesondere zur Bestimmung des seitlichen Abstands vom ersten Spiel (S1) das eingefahrene Verriegelungselement (40) mit einer Seite an einer Seite der Sicherheitsnut (31) anliegt,
und/oder dass das erste Spiel (S1) kleiner 2 mm, bevorzugt kleiner 1 mm, besonders bevorzugt kleiner 500 µm und idealerweise kleiner 300 µm eingestellt ist.

3. Schließvorrichtung (100) nach Anspruch 1,
**dadurch gekennzeichnet,**
**dass** das zweite Spiel (S2) durch einen Freiraum mit einem seitlichen Abstand zwischen der Arretiernut (11) und der eingefahrenen Zuhaltung (30) gebildet ist, wobei insbesondere zur Bestimmung des seitlichen Abstands vom zweiten Spiel (S2) die eingefahrene Zuhaltung (30) mit einer Seite an einer Seite der Arretiernut (11) anliegt, und/oder dass das zweite Spiel (S2) kleiner 2 mm, bevorzugt kleiner 1 mm, besonders bevorzugt kleiner 500 µm und idealerweise kleiner 300 µm eingestellt ist.

4. Schließvorrichtung (100) nach einem der vorhergehenden Ansprüche,
**dadurch gekennzeichnet,**
**dass** jede Zuhaltung (30) eine entsprechende Sicherheitsnut (31) zum Aufnehmen des Verriegelungselementes (40) aufweist,
wobei insbesondere das radial bewegbare Verriegelungselement (40) nur dann in die Sicherheitsnuten (31) an den Zuhaltungen (30) einfahrbar ist, wenn alle Zuhaltungen (30) durch einen passenden Schlüssel im Zylinderkern (20) sortiert sind.

5. Schließvorrichtung (100) nach einem der vorhergehenden Ansprüche,
**dadurch gekennzeichnet,**
**dass** das radial bewegbare Verriegelungselement (40) zwischen zumindest zwei Stellungen (1, 2) bewegbar ist, nämlich:
einer Betriebsstellung (1), in welcher das radial bewegbare Verriegelungselement (40) durch eine Drehung des Zylinderkerns (20) in die Sicherheitsnuten (31) an den Zuhaltungen (30) einfahrbar ist, wenn alle Zuhaltungen (30) sortiert sind,
und einer Verriegelungsstellung (2), in welcher das radial bewegbare Verriegelungselement (40) von mindestens einer Sicherheitsnut (31) mindestens einer Zuhaltung (30) losgelöst ist.

6. Schließvorrichtung (100) nach einem der vorhergehenden Ansprüche,
**dadurch gekennzeichnet,**
**dass** das Verriegelungselement (40) eine Längserstreckung (41) aufweist, die parallel zu einer Längserstreckung (L) des Zylinderkerns (20) verläuft,
und/oder dass das Verriegelungselement (40) federelastisch, vorzugsweise durch zwei endseitlich angeordnete Federelemente (42), in eine radiale Richtung aus dem Zylinderkern (20) zum Zylindergehäuse (10) vorgespannt ist.

7. Schließvorrichtung (100) nach einem der vorhergehenden Ansprüche,
**dadurch gekennzeichnet,**
**dass** die Zuhaltungen (30) federelastisch in zumindest eine Richtung aus dem Zylinderkern (20) zum Zylindergehäuse (10) vorgespannt sind,
wobei insbesondere die Zuhaltungen (30) abwechselnd in alternierende, vorzugsweise entgegengesetzte, Richtungen federelastisch vorgespannt sind,
und/oder dass mindestens eine Zuhaltung (30) durch mindestens ein, vorzugsweise seitlich zu einem Schlüsselkanal (21) im Zylinderkern (20) angeordnetes, Federelement (35) in eine im Wesentlichen tangentiale Richtung zum Zylinderkern (20) vorgespannt ist.

8. Schließvorrichtung (100) nach einem der vorhergehenden Ansprüche,
**dadurch gekennzeichnet,**
**dass** jede Zuhaltung (30) ein, vorzugsweise seitlich zu einem Schlüsselkanal (21) im Zylinderkern (20) angeordnetes, Federelement (35) aufweist,
wobei insbesondere die Federelemente (35) aller Zuhaltungen (30) von einer Seite zum Schlüsselkanal (21) im Zylinderkern (20) gelagert sind,
wobei bevorzugt die Federelemente (35) aller Zuhaltungen (30) parallel zueinander und parallel zur Erstreckungsebene des Schlüsselkanals (21) angeordnet sind.

9. Schließvorrichtung (100) nach einem der vorhergehenden Ansprüche,
**dadurch gekennzeichnet,**
**dass** mindestens eine Zuhaltung (30) an einem Kopfbereich (K1, K2) mindestens einen Hinterschnitt (32) aufweist, welcher mit einem Rampenabschnitt (13) der Arretiernut (11) in eine mechanische Wirkverbindung, insbesondere eine Rastverbindung, bringbar ist, wobei insbesondere die Zuhaltung (30) links und rechts an einem Kopfbereich, vorzugsweise an jeder Ecke, einen Hinterschnitt (32) aufweist.

10. Schließvorrichtung (100) nach einem der vorhergehenden Ansprüche,
**dadurch gekennzeichnet,**
**dass** die Zuhaltung (30), insbesondere ein Hinterschnitt (32) der Zuhaltung (30), mindestens eine Rastnase (33) aufweist, welche an einem Auffangabschnitt (14) der Arretiernut (11), insbesondere des Rampenabschnitts (13), zur Auflage kommt, wenn das Verriegelungselement (40) in die Sicherheitsnut (31) an der Zuhaltung (30) eingreift, jedoch kein passender Schlüssel benutzt wird,
und/oder dass die Zuhaltung (30), insbesondere ein Hinterschnitt (32) der Zuhaltung (30), mindestens einen Einschnitt (34) aufweist, um ein Überführen der Zuhaltung (30), insbesondere der Rastnase (33) der Zuhaltung (30), auf einen Auffangabschnitt (14) der Arretiernut (11), insbesondere des Rampenabschnitts (13), zu erleichtern.

11. Schließvorrichtung (100) nach einem der vorhergehenden Ansprüche,
**dadurch gekennzeichnet,**
**dass** das Zylindergehäuse (10) in Form einer Überlasthülse ausgebildet ist, um im Falle einer gewaltsamen Manipulation der Schließvorrichtung (100) eine mechanische Wirkverbindung zum Schließmechanismus des Fahrzeuges zu unterbrechen,
wobei insbesondere das Zylindergehäuse (10) mindestens eine, vorzugsweise zwei, stirnseitig angeordnete Aushebenschrägen (15, 16) aufweist, die das Zylindergehäuse (10) von einem Statorgehäuse (50), insbesondere von einem Blockierelement (51) des Statorgehäuses (50), drehbar entkoppeln.

12. Schließvorrichtung (100) nach einem der vorhergehenden Ansprüche,
**dadurch gekennzeichnet,**
**dass** ein Statorgehäuse (50) vorgesehen ist, in welchem das Zylindergehäuse (10) drehbar aufgenommen ist,
und/oder dass das Statorgehäuse (50) ein drehfest gelagertes Blockierelement (51) aufweist, welches in einer mechanischen Wirkverbindung mit dem Schließmechanismus des Fahrzeuges steht,
wobei im Normalbetrieb der Schließvorrichtung (100) das Zylindergehäuse (10) am Blockierelement (51) drehfest abgestützt ist,
und wobei im Überlastbetrieb der Schließvorrichtung (100) das Zylindergehäuse (10) durch ein gewaltsames Drehen vom Blockierelement (51) drehbar entkoppelbar ist, und/oder dass das Blockierelement (51) längsverschieblich im Statorgehäuse (50) gelagert ist,
wobei vorzugsweise das Blockierelement (51) mindestens eine, vorzugsweise zwei, stirnseitig angeordnete Blockiernuten (55, 56) für mindestens eine, vorzugsweise zwei, Aushebeschrägen (15, 16) am Zylindergehäuse (10) aufweist.

13. Schließvorrichtung (100) nach einem der vorhergehenden Ansprüche,
**dadurch gekennzeichnet,**
**dass** jede Zuhaltung (30) eine Schlüsselöffnung (36) für einen Schlüssel aufweist, wobei im Bereich der Schlüsselöffnung (36) mindestens ein individueller Mitnehmer (37) für einen passenden Schlüssel ausgebildet ist,
wobei insbesondere der Mitnehmer (37) zum Herstellen mindestens einer Kodierung für mindestens eine Kodierbahn an einem Schlüssel ausgebildet ist,
wobei bevorzugt zwei gleiche Sätze an Zuhaltungen (30) vorgesehen sind, von denen die Zuhaltungen (30) abwechselnd in alternierende, vorzugsweise entgegengesetzte, Richtungen im Zylindergehäuse (10) anordbar sind.

14. Schließvorrichtung (100) nach einem der vorhergehenden Ansprüche,
**dadurch gekennzeichnet,**
**dass** mindestens eine Zuhaltung (30) aus einem Material hoher Härte, insbesondere aus einem gehärteten Stahl, ausgebildet ist,
und/oder dass mindestens eine Zuhaltung (30) kodierfrei als ein Verstärkungselement (38) ausgebildet ist,
wobei insbesondere im Normalbetrieb der Schließvorrichtung (100) das Verstärkungselement (38) durch ein Verschlusselement (39) drehfest am Zylindergehäuse (10) haltbar ist,
und wobei im Überlastbetrieb der Schließvorrichtung (100) das Verstärkungselement (38) durch ein Verschlusselement (39) für eine Drehung freigegeben wird,
und/oder dass das Verstärkungselement (38) als eine Schließkappe für den Zylinderkern (20) ausgebildet ist.

## Claims

1. Locking device (100) for actuating a locking mechanism of a vehicle, comprising a cylinder housing (10),
in which a cylinder core (20) is rotatably received,
wherein a plurality of axially successively arranged, radially movable tumblers (30) are arranged between the cylinder housing (10) and the cylinder core (20),
which can be sorted in a release position (I) by a matching key in the cylinder core (20) in order to rotatably decouple the cylinder core (20) from the cylinder housing (10),
and which can be engaged to the cylinder housing (10) in a locking position (II) after withdrawal of the matching key from the cylinder core (20) in order to couple the cylinder core (20) to the cylinder housing (10) in a rotationally fixed manner,
wherein at least one radially movable locking element (40) is arranged between the cylinder housing (10) and the cylinder core (20), which can be retracted into a security groove (31) on at least one tumbler (30) by a rotation of the cylinder core (20),
wherein the security groove (31) of the at least one tumbler (30) is formed such that when the locking element (40) is retracted in the security groove (31), a first clearance (S1) occurs between the locking element (40) and the security groove (31),
and wherein a respective locking groove (11) for each tumbler (30) or a common locking groove (11) for all tumblers (30) is provided on the cylinder housing (10), into which the tumbler (30) or tumblers (30) is/are retractable in order to engage the cylinder core (20) to the cylinder housing (10) when no matching key is inserted in the cylinder core (20), **characterized in that**
the locking groove (11) is designed in such a way that, when the tumbler (30) is retracted into the locking groove (11), at least a second clearance (S2) is produced between the tumbler (30) and the locking groove (11).

2. Locking device (100) according to the preceding claim,
**characterized in that**
the first clearance (S1) is formed by a free space with a lateral spacing between the security groove (31) and the retracted locking element (40), wherein in particular in order to determine the lateral spacing from the first clearance (S1), the retracted locking element (40) abuts with one side against one side of the security groove (31),
and/or the first clearance (S1) is set to less than 2 mm, preferably less than 1 mm, particularly preferably less than 500 µm and ideally less than 300 µm.

3. Locking device (100) according to claim 1,
**characterized in that**
the second clearance (S2) is formed by a free space with a lateral spacing between the locking groove (11) and the retracted tumbler (30), wherein in particular in order to determine the lateral spacing from the second clearance (S2), the retracted tumbler (30) abuts with one side against one side of the locking groove (11),
and/or the second clearance (S2) is set to less than 2 mm, preferably less than 1 mm, particularly preferably less than 500 µm and ideally less than 300 µm.

4. Locking device (100) according to any one of the preceding claims,
**characterized in that**
each tumbler (30) comprises a corresponding security groove (31) for receiving the locking element (40),
wherein in particular the radially movable locking element (40) can only be retracted into the security grooves (31) at the tumblers (30) when all tumblers (30) are sorted by a matching key in the cylinder core (20).

5. Locking device (100) according to any one of the preceding claims,
**characterized in that**
the radially movable locking element (40) is movable between at least two positions (1, 2), namely:
an operating position (1) in which the radially movable locking element (40) can be retracted into the security grooves (31) on the tumblers (30) by a rotation of the cylinder core (20) when all tumblers (30) are sorted,
and a locking position (2) in which the radially movable locking element (40) is disengaged from at least one security groove (31) of at least one tumbler (30).

6. Locking device (100) according to any one of the preceding claims,
**characterized in that**
the locking element (40) comprises a longitudinal extension (41) which runs parallel to a longitudinal extension (L) of the cylinder core (20),
and/or the locking element (40) is spring-elastically pre-tensioned, preferably by two spring elements (42) arranged at the ends, in a radial direction from the cylinder core (20) to the cylinder housing (10).

7. Locking device (100) according to any one of the preceding claims,
**characterized in that**
the tumblers (30) are spring-elastically pre-tensioned in at least one direction from the cylinder core (20) to the cylinder housing (10),
wherein in particular the tumblers (30) are spring-elastically pre-tensioned alternately in alternating, preferably opposite, directions,
and/or at least one tumbler (30) is pre-tensioned in an essentially tangential direction with respect to the cylinder core (20) by at least one spring element (35), which is preferably arranged laterally with respect to a key channel (21) in the cylinder core (20).

8. Locking device (100) according to any one of the preceding claims,
**characterized in that**
each tumbler (30) comprises a spring element (35), preferably arranged laterally to a key channel (21) in the cylinder core (20),
wherein in particular the spring elements (35) of all tumblers (30) are mounted in the cylinder core (20) from one side to the key channel (21),
wherein preferably the spring elements (35) of all tumblers (30) are arranged parallel to each other and parallel to the extension plane of the key channel (21).

9. Locking device (100) according to any one of the preceding claims,
**characterized in that**
at least one tumbler (30) comprises at least one undercut (32) on a head region (K1, K2), which can be brought into a mechanical operative connection, in particular an engaging connection, with a ramp section (13) of the locking groove (11),
wherein in particular the tumbler (30) comprises an undercut (32) on the left and right on a head region, preferably at each corner.

10. Locking device (100) according to any one of the preceding claims,
**characterized in that**
the tumbler (30), in particular an undercut (32) of the tumbler (30), comprises at least one detent (33) which comes to bear on a catch section (14) of the locking groove (11), in particular of the ramp section (13), when the locking element (40) engages in the security groove (31) on the tumbler (30) but no matching key is used,
and/or the tumbler (30), in particular an undercut (32) of the tumbler (30), comprises at least one incision (34) in order to facilitate transfer of the tumbler (30), in particular of the detent (33) of the tumbler (30), onto a catch section (14) of the locking groove (11), in particular of the ramp section (13).

11. Locking device (100) according to any one of the preceding claims,
**characterized in that**
the cylinder housing (10) is designed in the form of an overload sleeve in order to interrupt a mechanical operative connection to the locking mechanism of the vehicle in the event of forcible manipulation of the locking device (100),
wherein in particular the cylinder housing (10) comprises at least one, preferably two, lift-off slopes (15, 16) arranged on the end face, which rotatably decouple the cylinder housing (10) from a stator housing (50), in particular from a blocking element (51) of the stator housing (50).

12. Locking device (100) according to any one of the preceding claims,
**characterized in that**
a stator housing (50) is provided in which the cylinder housing (10) is rotatably received, and/or the stator housing (50) comprises a blocking element (51) mounted in a rotationally fixed manner which is in mechanical operative connection with the locking mechanism of the vehicle,
wherein in normal operation of the locking device (100) the cylinder housing (10) is supported on the blocking element (51) in a rotationally fixed manner,
and wherein in overload operation of the locking device (100) the cylinder housing (10) can be rotatably decoupled from the blocking element (51) by a forcible rotation,
and/or the blocking element (51) is mounted longitudinally displaceably in the stator housing (50),
wherein preferably the blocking element (51) comprises at least one, preferably two, blocking grooves (55, 56) arranged on the end face for at least one, preferably two, lift-off slopes (15, 16) on the cylinder housing (10).

13. Locking device (100) according to any one of the preceding claims,
**characterized in that**
each tumbler (30) comprises a key opening (36) for a key, wherein at least one individual driver (37) for a matching key is formed in the region of the key opening (36), wherein in particular the driver (37) is designed to produce at least one coding for at least one coding track on a key,
wherein preferably two equal sets of tumblers (30) are provided, of which the tumblers (30) can be arranged alternately in alternating, preferably opposite, directions in the cylinder housing (10).

14. Locking device (100) according to any one of the preceding claims,
**characterized in that**
at least one tumbler (30) is formed from a material of high hardness, in particular from a hardened steel,
and/or at least one tumbler (30) is formed without coding as a reinforcing element (38), wherein, in particular during normal operation of the locking device (100), the reinforcing element (38) can be held in a rotationally fixed manner on the cylinder housing (10) by a closing element (39),
and wherein in overload operation of the locking device (100), the reinforcing element (38) is released for rotation by a closing element (39),
and/or the reinforcing element (38) is formed as a closing cap for the cylinder core (20).

## Revendications

1. Dispositif de verrouillage (100) pour actionner un mécanisme de verrouillage d'un véhicule, comprenant un boîtier de cylindre (10),
dans lequel un noyau de cylindre (20) est reçu de manière rotative,
dans lequel une pluralité de gâchettes (30) disposés axialement successivement et mobiles radialement sont disposés entre le boîtier de cylindre (10) et le noyau de cylindre (20),
qui peuvent être triés dans une position de libération (I) par une clé appropriée dans le noyau du cylindre (20) afin de découpler en rotation le noyau du cylindre (20) du boîtier de cylindre (10),
et qui peuvent être verrouillés sur le boîtier de cylindre (10) dans une position de verrouillage (II) après retrait de la clé appropriée du noyau de cylindre (20) afin d'accoupler le noyau de cylindre (20) au boîtier de cylindre (10) de manière fixe en rotation,
au moins un élément de verrouillage (40) mobile radialement étant disposé entre le boîtier de cylindre (10) et le noyau de cylindre (20), qui peut être rétracté dans une rainure de sécurité (31) sur au moins une gâchette (30) par une rotation du noyau de cylindre (20), dans lequel la rainure de sécurité (31) de l'au moins une gâchette (30) est formée de telle manière que, lorsque l'élément de verrouillage (40) est rétracté dans la rainure de sécurité (31), un premier cycle de service (S1) se produit entre l'élément de verrouillage (40) et la rainure de sécurité (31),
et dans lequel une rainure de verrouillage (11) respective pour chaque gâchette (30) ou une rainure de verrouillage (11) commune pour toutes les gâchettes (30) est prévue sur le boîtier de cylindre (10), dans laquelle la gâchette (30) ou les gâchettes (30) peuvent être rétractées afin de verrouiller le noyau de cylindre (20) au boîtier de cylindre (10) si aucune clé appropriée n'est insérée dans le noyau de cylindre (20),
**caractérisé en ce que**
la rainure de verrouillage (11) est conçue de telle sorte que, lorsque le gâchette (30) est rétractée dans la rainure de verrouillage (11), au moins un deuxième cycle de service (S2) est produit entre la gâchette (30) et la rainure de verrouillage (11).

2. Dispositif de verrouillage (100) selon la revendication précédente,
**caractérisé en ce que**
le premier cycle de service (S1) est formé par un espace libre avec un espacement latéral entre la rainure de sécurité (31) et l'élément de verrouillage (40) rétracté, l'élément de verrouillage rétracté (40) s'appuyant avec un côté contre un côté de la rainure de sécurité (31) en particulier pour déterminer l'espacement latéral par rapport au premier cycle de service (S1),
et/ou le premier cycle de service (S1) est fixé à moins de 2 mm, de préférence moins de 1 mm, particulièrement de préférence moins de 500 µm et idéalement moins de 300 µm.

3. Dispositif de verrouillage (100) selon la revendication 1,
**caractérisé en ce que**
le deuxième cycle de service (S2) est formé par un espace libre avec un espacement latéral entre la rainure de verrouillage (11) et le gâchette (30) rétractée, la gâchette (30) rétractée s'appuyant avec un côté contre un côté de la rainure de verrouillage (11) en particulier pour déterminer l'espacement latéral du deuxième cycle de service (S2), et/ou le deuxième cycle de service (S2) est fixé à moins de 2 mm, de préférence moins de 1 mm, particulièrement de préférence moins de 500 µm et idéalement moins de 300 µm.

4. Dispositif de verrouillage (100) selon l'une des revendications précédentes, **caractérisé en ce que**
chaque gâchette (30) comprend une rainure de sécurité (31) correspondante pour recevoir l'élément de verrouillage (40),
dans lequel en particulier l'élément de verrouillage (40) mobile radialement ne peut être rétracté dans les rainures de sécurité (31) des gâchettes (30) que lorsque toutes les gâchettes (30) sont triées par une clé correspondante dans le noyau du cylindre (20).

5. Dispositif de verrouillage (100) selon l'une des revendications précédentes, **caractérisé en ce que**
l'élément de verrouillage (40) mobile radialement est mobile entre au moins deux places (1, 2), à savoir
une place de fonctionnement (1) dans laquelle l'élément de verrouillage (40) mobile radialement peut être rétracté dans les rainures de sécurité (31) des gâchettes (30) par une rotation du noyau du cylindre (20) lorsque toutes les gâchettes (30) sont triées, et une place de verrouillage (2) dans laquelle l'élément de verrouillage (40) mobile radialement est désengagé d'au moins une rainure de sécurité (31) d'au moins une gâchette (30).

6. Dispositif de verrouillage (100) selon l'une des revendications précédentes, **caractérisé en ce que**
l'élément de verrouillage (40) a une extension longitudinale (41) qui est parallèle à une extension longitudinale (L) du noyau du cylindre (20),
et/ou l'élément de verrouillage (40) est accouplé élastiquement, de préférence par deux éléments de ressort (42) disposés aux extrémités, dans une direction radiale hors du noyau du cylindre (20) vers le boîtier de cylindre (10).

7. Dispositif de verrouillage (100) selon l'une des revendications précédentes, **caractérisé en ce que**
les gâchettes (30) sont accouplés élastiquement dans au moins une direction du noyau du cylindre (20) vers le boîtier de cylindre (10),
dans laquelle en particulier les gâchettes (30) sont accouplés élastiquement tour à tour dans des directions alternées, de préférence opposées,
et/ou au moins une gâchette (30) est accouplé dans une direction essentiellement tangentielle par rapport au noyau de cylindre (20) par au moins un élément de ressort (35) qui est disposé de préférence latéralement par rapport à un canal de clé (21) dans le noyau de cylindre (20).

8. Dispositif de verrouillage (100) selon l'une des revendications précédentes, **caractérisé en ce que**
chaque gâchette (30) comprend un élément à ressort (35) qui est disposé de préférence latéralement par rapport à un canal de clé (21) dans le noyau du cylindre (20),
dans lequel, en particulier, les éléments de ressort (35) de tous les gâchettes (30) sont montés dans le noyau du cylindre (20) d'un côté vers le canal de clé (21),
où de préférence les éléments de ressort (35) de tous les gâchettes (30) sont disposés parallèlement les uns aux autres et parallèlement au plan d'extension du canal de clé (21).

9. Dispositif de verrouillage (100) selon l'une des revendications précédentes, **caractérisé en ce qu'**
au moins une gâchette (30) présente, sur une zone de tête (K1, K2), au moins une contre-dépouille (32) qui peut être amenée en liaison active mécanique, en particulier en liaison d'encliquetage, avec une section de rampe (13) de la rainure de verrouillage (11), dans lequel, en particulier, la gâchette (30) présente une contre-dépouille (32) à gauche et à droite au niveau d'une zone de tête, de préférence à chaque coin.

10. Dispositif de verrouillage (100) selon l'une des revendications précédentes, **caractérisé en ce que**
la gâchette (30), en particulier une contre-dépouille (32) de la gâchette (30), présente au moins un cran d'arrêt (33) qui vient en appui sur une section d'arrêt (14) de la rainure de verrouillage (11), en particulier de la section de rampe (13), lorsque l'élément de verrouillage (40) s'engage dans la rainure de sécurité (31) de la gâchette (30), mais qu'aucune clé appropriée n'est utilisée,
et/ou la gâchette (30), en particulier une contre-dépouille (32) de la gâchette (30), présente au moins une incision (34) afin de faciliter le transfert de la gâchette (30), en particulier du cran d'arrêt (33) de la gâchette (30), sur une section d'arrêt (14) de la rainure de verrouillage (11), en particulier de la section de rampe (13).

11. Dispositif de verrouillage (100) selon l'une des revendications précédentes, **caractérisé en ce que**
le boîtier de cylindre (10) est conçu sous la forme d'un manchon de surcharge afin d'interrompre une liaison active mécanique avec le mécanisme de verrouillage du véhicule en cas de manipulation forcée du dispositif de verrouillage (100),
le boîtier de cylindre (10) présentant en particulier au moins une, de préférence deux, pentes de soulèvement (15, 16) disposées sur la face frontale, qui découplent en rotation le boîtier de cylindre (10) d'un boîtier de stator (50), en particulier d'un élément de blocage (51) du boîtier de stator (50).

12. Dispositif de verrouillage (100) selon l'une des revendications précédentes, **caractérisé en ce qu'**
un boîtier de stator (50) est prévu dans lequel le boîtier de cylindre (10) est reçu de manière rotative,
et/ou le boîtier de stator (50) comprend un élément de blocage (51) qui est monté de manière fixe en rotation et qui est en liaison active mécanique avec le mécanisme de verrouillage du véhicule,
dans lequel, en fonctionnement normal du dispositif de verrouillage (100), le boîtier de cylindre (10) est soutenu sur l'élément de blocage (51) de manière fixe en rotation,
et dans lequel, en cas de surcharge du dispositif de verrouillage (100), le boîtier de cylindre (10) peut être découplé en rotation de l'élément de blocage (51) par une rotation forcée, et/ou l'élément de blocage (51) est monté de manière à pouvoir se déplacer longitudinalement dans le boîtier de stator (50),
l'élément de blocage (51) présentant de préférence au moins une, de préférence deux, rainures de bloacge (55, 56) disposées sur la face frontale pour au moins un, de préférence deux, pentes de soulèvement (15, 16) sur le boîtier de cylindre (10).

13. Dispositif de verrouillage (100) selon l'une des revendications précédentes, **caractérisé en ce que**
chaque gâchette (30) comprend une ouverture (36) pour une clé, au moins un conducteur individuel (37) pour une clé appropriée étant formé dans la région de l'ouverture de la clé (36),
dans lequel le conducteur (37) est en particulier conçu pour produire au moins un codage pour au moins une piste de codage sur une clé,
dans lequel il est prévu de préférence deux jeux égaux de gâchettes (30), dont les gâchettes (30) peuvent être disposées alternées, de préférence dans des directions opposées, dans le boîtier de cylindre (10).

14. Dispositif de verrouillage (100) selon l'une des revendications précédentes, **caractérisé en ce qu'**
au moins une gâchette (30) est formé d'un matériau de grande dureté, en particulier d'un acier trempé,
et/ou au moins une gâchette (30) est formé sans codage comme élément de renforcement (38),
dans lequel, en particulier pendant le fonctionnement normal du dispositif de verrouillage (100), l'élément de renforcement (38) peut être maintenu de manière fixe en rotation sur le boîtier de cylindre (10) par un élément de fermeture (39),
et dans lequel, en cas de surcharge du dispositif de verrouillage (100), l'élément de renforcement (38) est libéré pour la rotation par un élément de fermeture (39),
et/ou l'élément de renforcement (38) est conçu comme un bouchon de fermeture pour le noyau du cylindre (20).
